# EUROPEAN PATENT APPLICATION

(11) **EP 4 815 146 A1**
(43) Date of publication of application: **30.09.2026**
(21) Application number: 24923230.7
(22) Date of filing: 01.08.2024
(51) Int. Cl.: H01M 50/244

(54) **BATTERY AND ELECTRIC DEVICE**

(30) Priority: 06.02.2024 CN 202420286780 U
(71) Applicant: Contemporary Amperex Technology Co., Limited, Ningde, Fujian 352100 (CN)
(72) Inventor: TANG, Yu, Ningde, Fujian 352100 (CN); WANG, Wenli, Ningde, Fujian 352100 (CN); YANG, Haiqi, Ningde, Fujian 352100 (CN); HUANG, Xiaoteng, Ningde, Fujian 352100 (CN)
(74) Representative: Lorenz Seidler Gossel Part. mbB
(86) International application number: PCT/CN2024/109304
(87) International publication number: WO 2025/167015

(57) **Abstract**

A battery (1) and an electric device. The battery (1) comprises: a case body (200); battery cells (102), which are provided in the case body (200); a first heat exchange member (100), which is fitted to the outside of the case body (200); and a fixing member (25), which is provided on the case body (200), wherein the fixing member (25) is arranged close to at least one edge (100d) of the first heat exchange member (100), and is fastened and connected to the first heat exchange member (100) and the case body (200).

## Description

### CROSS-REFERENCE TO RELATED APPLICATIONS

The present application claims priority to and benefits of Chinese Patent Application No. 202420286780.X, filed on February 6, 2024. The entire content of the above-referenced application is incorporated herein by reference.

### TECHNICAL FIELD

The present application relates to the field of battery technologies, and in particular, to a battery and a power consuming apparatus.

### BACKGROUND

In recent years, new energy vehicles have experienced leapfrog development. In the field of electric vehicles, batteries, as the power source of electric vehicles, play an irreplaceable and critical role. A battery includes a case body and a plurality of battery cells accommodated in the case body. As a core component of a new energy vehicle, a battery is subject to stringent requirements in terms of safety and service life. To ensure the service life of a battery, in existing technologies, a cold plate is connected to a case body to cool the battery. However, the connection reliability between the cold plate and the case body affects further improvement of the reliability of the battery and further prolongation of the service life of the battery.

### SUMMARY

Embodiments of the present application provide a battery and a power consuming apparatus, which can effectively improve the reliability of the battery.

According to a first aspect, embodiments of the present application provide a battery, including: a case body; a battery cell, disposed in the case body; a first heat exchange member, fitted outside the case body; and a fixing member, disposed on the case body, where the fixing member is disposed close to at least one edge of the first heat exchange member and fixedly connects the first heat exchange member to the case body.

In the foregoing technical solution, the fixing member can be disposed close to at least one edge of the first heat exchange member, so that the at least one edge of the first heat exchange member can be fixedly connected to the case body, to improve the connection reliability between a region in which the edge of the first heat exchange member is located and the case body, making the connection between the first heat exchange member and the case body more secure, which is conducive to improving the heat exchange stability of the whole first heat exchange member for the battery, thereby further improving the reliability of the battery.

In some embodiments of the present application, the first heat exchange member includes a first heat exchange flow channel, and the first heat exchange flow channel includes a first heat exchange section and a second heat exchange section; and a U-shaped region is formed by bending the second heat exchange section, and the first heat exchange section is bent and disposed in the U-shaped region and is connected to the second heat exchange section in a bent configuration; and the fixing member is connected to the first heat exchange section and the second heat exchange section and is disposed close to or corresponding to bent portions of the first heat exchange section and the second heat exchange section.

In the foregoing technical solution, the U-shaped region is formed by bending the second heat exchange section, and the first heat exchange section is bent and disposed in the U-shaped region. When the first heat exchange member exchanges heat with the battery, the U-shaped region formed by the peripheral second heat exchange section may be opposite to peripheral battery cells of the battery, and the first heat exchange section in the U-shaped region may be opposite to inner battery cells, so that the first heat exchange member may make up for a temperature difference between the inside and outside caused by heat exchange between the peripheral battery cells and the environment, to make heat exchange effects of the peripheral battery cells of the battery and the inner battery cells of the battery tend to be consistent, thereby improving the temperature uniformity of the battery, and improving the service life of the battery to some extent. The fixing member can restrict and limit regions in which the bent portions of the first heat exchange section and the second heat exchange section are located, thereby improving the connection reliability between the bent portions of the first heat exchange section and the second heat exchange section and the case body, and improving the operational reliability of the first heat exchange section and the second heat exchange section, which is conducive to improving the reliability of the battery.

In some embodiments of the present application, the first heat exchange section includes a first heat exchange portion and a first bent portion, a plurality of first heat exchange portions are provided, the plurality of first heat exchange portions are disposed at intervals in a first direction and are successively connected by the first bent portion, each first heat exchange portion extends along a second direction, the second direction is disposed at an angle with respect to the first direction, and the first bent portion is arc-shaped; and the fixing member is connected to the first bent portion or a portion of the first heat exchange portion close to the first bent portion.

In the foregoing technical solution, the first heat exchange portion is arranged to linearly extend along the second direction, so that the production difficulty of the first heat exchange portion can be reduced, thereby reducing the production complexity of the first heat exchange flow channel. In addition, the straight tube can further improve the flow speed of a heat exchange fluid, thereby improving the heat exchange effect of the first heat exchange flow channel. The first bent portion is disposed, so that the flow direction of the fluid inside the first heat exchange section can be changed, a smooth transition connection between two first heat exchange portions is implemented, and the serpentine extension of the first heat exchange flow channel is implemented. Therefore, a contact area between a single battery cell and the first heat exchange flow channel can be increased, thereby increasing a heat exchange area, and improving heat exchange efficiency of the first heat exchange flow channel. In addition, the arc shape of the first bent portion can further reduce the flow resistance of the fluid and reduce a pressure drop, thereby improving the flow rate of the fluid, and further improving heat exchange efficiency of the first heat exchange section. In addition, the first bent portion is arranged, so that the first heat exchange section has a more compact structure, and occupies a smaller overall space. This is more conducive to the miniaturized design of the battery, and ensures the volumetric energy density of the battery. The first bent portion or the portion of the first heat exchange portion close to the first bent portion by the fixing member, so that the reliability of the first heat exchange portion and the first bent portion can be improved, thereby improving the heat exchange stability for the battery cell, which is conducive to improving the reliability of the battery.

In some embodiments of the present application, a plurality of fixing members are provided and are disposed at least on two sides of the first heat exchange section in the second direction, and each fixing member extends along the first direction and is connected to at least one adjacent first bent portion and/or the portion of the first heat exchange portion close to the first bent portion.

In the foregoing technical solution, the plurality of fixing members are disposed, and the plurality of fixing members are disposed at least on two sides of the first heat exchange section in the second direction. In this way, the fixing positions of the first heat exchange section to the case body can be increased, thereby improving the connection reliability between the first heat exchange section and the case body, reducing the probability that the first heat exchange member is separated from the case body or has inadequate adhesive compression, and further improving the overall reliability of the battery. The fixing member extends along the first direction and is connected to at least one adjacent first bent portion and/or the portion of the first heat exchange portion close to the first bent portion. In this way, each fixing member can simultaneously fix a plurality of first heat exchange portions, so that a quantity of fixing members can be reduced, assembly steps can be reduced, assembly efficiency can be improved, and the time for producing and manufacturing the battery can be reduced.

In some embodiments of the present application, the second heat exchange section includes a second heat exchange portion, a third heat exchange portion, a fourth heat exchange portion, a second bent portion, and a third bent portion, the second heat exchange portion extends along a first lateral peripheral edge of the first heat exchange section, the third heat exchange portion is connected between the second heat exchange portion and the first heat exchange section and extends along a second lateral peripheral edge of the first heat exchange section, a first end of the third heat exchange portion is connected to the second heat exchange portion at an angle, a second end of the third heat exchange portion is connected to the first heat exchange section at an angle, and the fourth heat exchange portion is in communication with the second heat exchange portion, is connected to the second heat exchange portion at an angle, and extends along a third lateral peripheral edge of the first heat exchange section; the second bent portion and the third bent portion are both arc-shaped, the second bent portion is connected between the first end of the third heat exchange portion and the second heat exchange portion, and the third bent portion is connected between the second end of the third heat exchange portion and the first heat exchange section; the fixing member is connected to the second bent portion or a portion of the second heat exchange portion close to the second bent portion; and the fixing member is connected to the third bent portion or a portion of the first heat exchange section close to the third bent portion.

In the foregoing technical solution, the second heat exchange portion, the third heat exchange portion, and the fourth heat exchange portion are respectively arranged on three sides of the first heat exchange section, so that the second heat exchange section can surround the first heat exchange section, thereby increasing the compactness of arrangement of the first heat exchange flow channel, and achieving a miniaturized structure of the first heat exchange flow channel, which is conducive to ensuring the volumetric energy density of the battery. In addition, the structure of the first heat exchange flow channel can be simplified, thereby facilitating the processing and production of the first heat exchange member. The second bent portion is disposed to enable the flow direction of the fluid to change from an original flow direction to a direction perpendicular to the original flow direction after the fluid passes through the second bent portion. In addition, the arc shape can further reduce the flow resistance of the fluid, so that the fluid can smoothly flow in the second bent portion, thereby effectively preventing excessively slow flow of the fluid that consequently degrades heat exchange efficiency. The second bent portion or the portion of the second heat exchange portion close to the second bent portion is connected by the fixing member, and the third bent portion or the portion of the first heat exchange section close to the third bent portion is connected by the fixing member. In this way, the connection reliability between the case body and a region where the second bent portion and the second heat exchange portion are adjacent and a region where the third bent portion and the first heat exchange section are adjacent can be improved, and the stability of the heat exchange fluid flowing through the second heat exchange portion, the second bent portion, the third bent portion, and the first heat exchange section can be improved, which is conducive to improving the heat exchange reliability of the first heat exchange member on the battery cell, thereby improving the reliability of the battery.

In some embodiments of the present application, the first heat exchange section includes a plurality of first heat exchange portions, and the plurality of first heat exchange portions are successively connected in the first direction in a bent configuration, each first heat exchange portion extends along the second direction, and the second direction is disposed at an angle with respect to the first direction; the first heat exchange flow channel further includes a third heat exchange section and a fourth bent portion, the third heat exchange section is arranged on a side of the first heat exchange section facing away from the third heat exchange portion, the third heat exchange section is connected to one of the plurality of first heat exchange portions that is closest to the second heat exchange portion in the first direction, and the fourth bent portion is arc-shaped and is connected between the third heat exchange section and the first heat exchange portion; and the fixing member is connected to the fourth bent portion or a portion of the first heat exchange portion close to the fourth bent portion.

In the foregoing technical solution, the third heat exchange section is disposed, so that the heat exchange area of the first heat exchange flow channel can be further increased, thereby further improving the heat exchange effect of the first heat exchange flow channel. The fourth bent portion is disposed to enable the flow direction of the fluid to change from an original flow direction to a direction perpendicular to the original flow direction after the fluid passes through the fourth bent portion. In addition, the arc shape can further reduce the flow resistance of the fluid, so that the fluid can smoothly flow in the fourth bent portion, thereby effectively preventing excessively slow flow of the fluid that consequently degrades heat exchange efficiency. The fourth bent portion or the portion of the first heat exchange portion close to the fourth bent portion is connected by the disposed fixing member, so that the probability of adhesive failure or inadequate adhesive compression between the position of the fourth bent portion and the case body can be reduced, thereby improving the heat exchange reliability between the heat exchange fluid and the battery cell when the heat exchange fluid flows through the fourth bent portion, so that the reliability of the battery can be improved.

In some embodiments of the present application, a plurality of fixing members are provided and are disposed at least on two sides of the first heat exchange section in the second direction, and each fixing member extends along the first direction; and one of the plurality of fixing members that is close to the third heat exchange portion is a first fixing member, another one of the plurality of fixing members that is close to the third heat exchange section is a second fixing member, the first fixing member is connected to or disposed close to the second bent portion and is connected to or disposed close to the third bent portion, and the second fixing member is connected to or disposed close to the fourth bent portion.

In the foregoing technical solution, in the plurality of fixing members, the first fixing member can be connected to or disposed close to the second bent portion and connected to or disposed close to the third bent portion. The second fixing member is connected to or disposed close to the fourth bent portion. That is, the second bent portion and the third bent portion are located at one end of the first heat exchange section in the second direction, and the fourth bent portion is located at the other end of the first heat exchange section in the second direction. Therefore, the first fixing member and the second fixing member are disposed, so that the bent portions of the first heat exchange section that are located at two ends of the second direction can be respectively fixed, so that the bent portions of the first heat exchange member can be better fixed to the case body, thereby further improving the connection reliability between the first heat exchange member and the case body.

In some embodiments of the present application, the first heat exchange flow channel further includes a first access section, one end of the first access section is connected to the third heat exchange section at an angle, and the other end of the first access section is formed as a first access port of the heat exchange flow channel; and the first access section extends along the second direction away from the first heat exchange section, and the third heat exchange section is disposed extending along the first direction.

In the foregoing technical solution, the first access section is disposed, so that it is convenient to connect to an external tube, allowing a heat exchange medium to enter or exit the first heat exchange flow channel. In addition, the function of guiding the heat exchange fluid entering or exiting the first heat exchange flow channel can also be implemented to allow the heat exchange fluid to rapidly enter or exit, thereby improving the heat exchange rate. The first access section is disposed extending along the second direction away from the first heat exchange section, so that the arrangement of tubes of the first heat exchange flow channel is more appropriate, and it is convenient to connect to an external tube. In addition, the first access port may be further away from a battery assembly including a plurality of rows of battery cells, which is conducive to reducing occurrence of damage caused to the battery assembly due to water leakage from the first access port.

In some embodiments of the present application, the second heat exchange portion extends along the second direction, the second heat exchange section further includes a sixth bent portion, the sixth bent portion is arc-shaped and is connected between one end of the fourth heat exchange portion and an end of the second heat exchange portion away from the third heat exchange portion, the other end of the fourth heat exchange portion extends along the first direction away from the second heat exchange portion, and the first direction and the second direction are disposed at an angle; and the fixing member is connected to the sixth bent portion or a portion of the second heat exchange portion close to the sixth bent portion.

In the foregoing technical solution, the sixth bent portion is disposed, so that the flow direction of the fluid inside the first heat exchange flow channel can be changed, and the serpentine arrangement of the first heat exchange flow channel is implemented. Therefore, a heat exchange area of the first heat exchange flow channel can be increased, thereby improving heat exchange efficiency of the first heat exchange flow channel. In addition, the arc shape of the sixth bent portion can further reduce the flow resistance of the fluid and reduce a pressure drop, thereby improving the flow rate of the heat exchange fluid, and further improving heat exchange efficiency of the first heat exchange flow channel.

In some embodiments of the present application, the first heat exchange flow channel further includes a second access section, one end of the second access section is connected to the fourth heat exchange portion at an angle, and the other end of the second access section is formed as a second access port of the heat exchange flow channel; and the second access section extends along the second direction away from the first heat exchange section, and the fourth heat exchange portion is disposed extending along the first direction.

In the foregoing embodiment, the second access section is disposed, so that it is convenient to connect to an external tube, allowing a heat exchange medium to enter or exit the first heat exchange flow channel to complete heat exchange on the battery cell. In addition, the function of guiding the heat exchange fluid entering or exiting the first heat exchange flow channel may also be implemented to allow the heat exchange fluid to rapidly enter or exit, thereby improving the heat exchange rate. The second access section is disposed extending along the second direction away from the first heat exchange section, so that the arrangement of tubes of the first heat exchange flow channel is more appropriate, and it is convenient to connect to an external tube. In addition, the second access port may be further away from the battery assembly, which is conducive to reducing occurrence of damage caused to the battery assembly due to water leakage from the second access port.

In some embodiments of the present application, a plurality of first heat exchange members are provided and are disposed at intervals in the first direction, and the first direction and the second direction are disposed at an angle; and the fixing member is connected to the at least one adjacent first bent portion or the portion of the first heat exchange portion close to the first bent portion in the plurality of first heat exchange members.

In the foregoing technical solution, a plurality of first heat exchange members are disposed at intervals in the first direction, and the first direction and the second direction are disposed at an angle. In this way, the diversity of the first heat exchange members can be enhanced, to improve the adaptability of the first heat exchange members, so that the first heat exchange members can meet different requirements of the battery, thereby improving the market competitiveness of the battery. In addition, the plurality of first heat exchange members are arranged in parallel, so that the plurality of first heat exchange members can exchange heat at the same time, thereby reducing the heat exchange time of individual first heat exchange members, and improving heat exchange efficiency. The at least one adjacent first bent portion or the portion of the first heat exchange portion close to the first bent portion in the plurality of first heat exchange members is connected by the fixing member. Therefore, the fixing member can simultaneously fix the plurality of first heat exchange members to the case body, so that a quantity of fixing members can be reduced, and assembly steps can be reduced, thereby improving assembly efficiency.

In some embodiments of the present application, the first heat exchange member includes at least one heat exchange tube, when a plurality of heat exchange tubes are provided, the plurality of heat exchange tubes are disposed at intervals and are in successive communication, and an inner wall of each heat exchange tube defines the first heat exchange flow channel.

In the foregoing embodiment, the first heat exchange member is configured to include at least one heat exchange tube, so that the process complexity of the first heat exchange member can be reduced, thereby improving the production rate of the first heat exchange member, and a pressure drop of the fluid inside a single heat exchange tube can be reduced, thereby improving heat exchange efficiency. In addition, a tube-like structure is simpler than a plate-like structure, has low costs, and is convenient to process.

In some embodiments of the present application, the case body is provided with a plurality of case walls, at least one of the plurality of case walls is a first case wall, the first case wall is provided with a first groove, and the fixing member is at least partially located in the first groove.

In the foregoing technical solution, the fixing member is at least partially disposed in the first groove, and the first groove can provide a partial space required for installing the fixing member. Therefore, on one hand, the structural compactness of the assembled body formed by the case body, the fixing member, and the first heat exchange member can be improved, and the overall size can be made relatively small, which is conducive to saving a space, reducing the volume, and improving the volumetric energy density of the battery. On the other hand, the first groove can limit and restrict the fixing member, to improve the connection reliability between the fixing member and the case body, thereby further improving the connection reliability between the first heat exchange member and the case body, which is conducive to improving the reliability of the battery and prolonging the service life of the battery.

In some embodiments of the present application, a portion of the first case wall protrudes toward a side away from the first heat exchange member to form a convex portion, and the first groove is formed by a peripheral wall at a protrusion position of the convex portion.

In the foregoing technical solution, the convex portion protrudes toward the inner side of the case body, and the first groove is formed in the peripheral wall of the protrusion position. Therefore, on the premise that the first groove is formed in the first case wall and can be used for accommodating the fixing member, the remaining portion of the first case wall other than the convex portion can be configured to have a relatively small thickness, which is conducive to reducing the thickness of the first case wall and reducing the weight of the first case wall, thereby improving the energy density of the battery. In addition, the first groove is formed in the peripheral wall of the convex portion, which is also conducive to improving the strength at a position of the first groove, reducing insufficient structural strength of the first case wall due to the arrangement of the first groove, so that the reliability of the first case wall can be improved, thereby improving the reliability of the case body, and improving the overall reliability of the battery.

In some embodiments of the present application, the convex portion protrudes toward an inner side of the case body, the battery further includes a beam structure, the beam structure is disposed in the case body, the beam structure is provided with a second groove, and the convex portion is at least partially located in the second groove.

In the foregoing technical solution, the second groove is provided in the beam structure to accommodate the convex portion, so that the beam structure and the convex portion can be combined together, and the probability that the convex portion occupies a space required by the battery cell in the case body is reduced, which is conducive to improving the compactness of the internal structure of the battery, thereby improving the volumetric energy density of the battery. In addition, the convex portion and the second groove cooperate to limit the position of the beam structure, thereby improving the connection reliability between the beam structure and the case body, and further improving the reliability of the battery.

In some embodiments of the present application, the beam structure and the fixing member extend along the first direction, and the second groove and the convex portion extend along the first direction.

In the foregoing technical solution, the beam structure, the fixing member, the second groove, and the convex portion all have an elongated shape. When the second groove and the convex portion have an elongated shape, the strength of the beam structure can be improved, and the tensile and flexural strength of the beam structure in the first direction can be improved, thereby improving the overall strength of the beam structure. The fixing member has an elongated shape. On one hand, the fixing member can work together with the convex portion to further improve the structural strength of the beam structure, and on the other hand, the fixing member can increase more fixing positions and a larger fixing surface, so that the fixing effect on the first heat exchange member can be enhanced, and a quantity of fixing members can be reduced while a better fixing effect is achieved on the first heat exchange member, thereby improving assembly efficiency.

In some embodiments of the present application, the beam structure is an expansion beam, the expansion beam is expandable and retractable in the second direction, and the second direction is parallel to the first case wall and is perpendicular to the first direction.

In the foregoing technical solution, because the fixing member extends along the first direction and the second groove and the convex portion extend along the first direction, the fixing member and the convex portion can improve the structural strength of the expansion beam, and improve the tensile and flexural strength of the expansion beam in the first direction, that is, the reliability of the expansion beam can be improved, which is conducive to reducing the probability of stress concentration and structural instability of the battery cell, thereby further improving the overall reliability of the battery.

In some embodiments of the present application, the beam structure is a hollow beam, and a portion of the beam structure protrudes toward an inner side of the hollow beam to form the second groove.

In the foregoing technical solution, the beam structure is disposed as a hollow beam, and after the portion of the beam structure protrudes toward the inner side of the hollow beam to form the second groove, the strength of the beam structure can be further improved, thereby improving the reliability of the beam structure. In addition, the beam structure is a hollow beam, and the second groove may be formed in a manner of protruding toward the inside, which is conducive to reducing the difficulty in forming the second groove and improving the manufacturability of the second groove, thereby reducing manufacturing costs. When the beam structure is a hollow beam, the weight of the beam structure can be further reduced, thereby reducing the overall weight of the battery and improving the energy density of the battery. In addition, the beam structure is a hollow beam having high strength and stiffness, so that better support can be achieved, and the usage of materials can be reduced, thereby further reducing manufacturing costs.

In some embodiments of the present application, the convex portion and the second groove are bonded. In the technical solution, the convex portion and the second groove are bonded, so that the convex portion and the second groove can be more tightly and securely combined, and the connection reliability between the beam structure and the case body can be improved, and the effect of increasing the strength of the convex portion on the beam structure can be further improved, so that the beam structure has higher strength.

In some embodiments of the present application, the beam structure is a non-metal beam structure. In the technical solution, the strength of the beam structure can be improved after the convex portion and the second groove cooperate, so that a requirement of the beam structure for force-bearing strength can be reduced. The beam structure is disposed as a non-metal beam structure, so that the weight of the beam structure can be reduced, the electrical safety can be improved, and a thermal insulation effect can be improved.

In some embodiments of the present application, the first case wall is a bottom wall of the case body, and the first heat exchange member is located on an outer side of the case body.

In the foregoing technical solution, the first case wall is the bottom wall and may have a large surface, so that the first heat exchange member disposed on the bottom wall can have a larger heat surface area, thereby improving the heat exchange effect of the first heat exchange member on the battery cell, and improving the heat exchange efficiency. The first heat exchange member is located on the outer side of the case body, so that the probability that a cooling medium in the first heat exchange member leaks to the case body to cause a safety risk can be reduced, thereby improving the reliability of the battery.

In some embodiments of the present application, the case body includes a case shell and a bottom panel, a bottom of the case shell is provided with a first opening, the bottom panel is connected to the bottom of the case shell to close the first opening, the first heat exchange member is fitted on a side of the bottom panel away from the case shell, and the fixing member is disposed on the bottom panel.

In the foregoing technical solution, the bottom panel is generally a plate having the largest area of the case body, and the first heat exchange member is fitted on the side of the bottom panel away from the case shell. Therefore, a larger heat exchange surface can be provided with the battery cell in the case body, thereby improving a heat exchange effect, and improving heat exchange efficiency. The fixing member is disposed on the bottom panel, and the fixing member can fix the first heat exchange member on the outer side of the case body, thereby reducing the probability that the fixing member occupies a space inside the case body, and reducing the impact of the fixing member on the space required by the battery cell.

In some embodiments of the present application, the battery further includes a protective plate, the protective plate is disposed on a side of the first heat exchange member away from the case body, the protective plate is connected to the case body and forms a protective space with the case body, and the first heat exchange member is located in the protective space.

In the foregoing technical solution, the protective plate is disposed on the side of the first heat exchange member away from the case body to protect the first heat exchange member, reduce the probability that the first heat exchange member is damaged by collision with a foreign object, and reduce the probability that the first heat exchange member is impacted by a foreign object, thereby improving the reliability of the first heat exchange member, and further improving the reliability of the battery.

In some embodiments of the present application, the case body is an integrally stamped member and includes a bottom wall and a surrounding wall.

In the foregoing technical solution, the case body is provided as an integrally stamped member, the bottom and the peripheral side of the case body are closed, so that the case body has high sealing performance. After the first heat exchange member is fitted on the outer side of the case body, a sealing requirement on the case body can be reduced, which is conducive to simplifying an assembly process and reducing manufacturing costs. In addition, the case body is an integrally stamped member, so that the case body has relatively high structural strength, and has a relatively low probability of deformation and damage under impact, which is conducive to improving the reliability of the battery. Because the case body is an integrally stamped member, the case body has relatively high strength and has a small wall thickness, so that the weight of the case body can be reduced, and the volumetric energy density per of the battery can be improved.

In some embodiments of the present application, the first heat exchange member includes a plurality of flat tubes in successive communication, and an inner wall of each flat tube defines the first heat exchange flow channel.

In the foregoing technical solution, because the case body is an integrally stamped member, based on this, the first heat exchange member is configured to include the plurality of flat tubes, so that the structural arrangement of the first heat exchange member and the case body is more compact, and space utilization is more efficient, which is conducive to reducing the volume of the case body and improving the volumetric energy density of the battery. Next, the flat tube further has a good pressure resistance capability, can bear a particular pressure and payload, and provides excellent tube protection and structural support, which is conducive to improving the reliability of the first heat exchange member.

In some embodiments of the present application, the battery further includes a second heat exchange member, the second heat exchange member is located in the case body and is fitted on at least one inner wall surface of the case body, and a structure of the second heat exchange member is the same as or different from that of the first heat exchange member.

In the foregoing technical solution, the case body can exchange heat on one side of the internal battery cell through the first heat exchange member, and can exchange heat on the other side of the battery cell using the second heat exchange member. That is, the second heat exchange member and the first heat exchange member may cooperate with each other to exchange heat on the battery cell, so that heat on more side surfaces of the battery cell can be exchanged, and the heat exchange surface of the battery cell can be increased, which is conducive to improving heat exchange efficiency, thereby greatly improving a heat exchange effect.

In some embodiments of the present application, the battery further includes a third heat exchange member, the third heat exchange member is located in the case body and is disposed between any two adjacent battery cells, and a structure of the third heat exchange member is the same as or different from that of the first heat exchange member.

In the foregoing technical solution, the first heat exchange member may perform heat exchange on side surfaces of a plurality of battery cells in the case body on the same side, and the third heat exchange member can perform heat exchange on other side surfaces between two adjacent battery cells. Therefore, the third heat exchange member and the first heat exchange member cooperate with each other to perform heat exchange on two surfaces of the battery cell, so that heat on more side surfaces of the battery cell can be exchanged, and the heat exchange surface of the battery cell is increased, which is conducive to improving heat exchange efficiency, thereby greatly improving a heat exchange effect.

According to a second aspect, embodiments of the present application provide a power consuming apparatus, including the battery.

In the foregoing technical solution, because the connection reliability between the first heat exchange member and the case body in the battery is relatively high, and the probability that the first heat exchange member and the case body separate from each other is relatively low, the battery has high heat exchange stability, so that the electrical reliability of the power consuming apparatus can be improved.

### BRIEF DESCRIPTION OF THE DRAWINGS

To describe the technical solutions in the embodiments of the present application more clearly, the following briefly introduces the accompanying drawings required for the embodiments. It should be understood that the following accompanying drawings show merely some embodiments of the present application and therefore should not be considered as a limitation to the scope. Persons of ordinary skill in the art may still derive other related drawings from these accompanying drawings without creative efforts.
FIG. 1 is a schematic structural diagram of a vehicle according to some embodiments of the present application;
FIG. 2 is a structural exploded view of a battery according to some embodiments of the present application;
FIG. 3 is a partial schematic structural diagram 1 of a battery according to some embodiments of the present application;
FIG. 4 is an exploded view 1 of a battery according to some embodiments of the present application;
FIG. 5 is a position distribution diagram of a first heat exchange member and a plurality of battery cells according to some embodiments of the present application;
FIG. 6 is a partial schematic structural diagram 2 of a battery according to some embodiments of the present application;
FIG. 7 is a top view of a battery according to some embodiments of the present application;
FIG. 8 is a cross-sectional view along a line A-A in FIG. 7;
FIG. 9 is a partial schematic enlarged view at a position I in FIG. 8;
FIG. 10 is an exploded view 2 of a battery according to some embodiments of the present application;
FIG. 11 is a schematic diagram of an internal structure a battery according to some embodiments of the present application;
FIG. 12 is a partial schematic enlarged view at a position II in FIG. 11;
FIG. 13 is a partial schematic structural diagram 3 of a battery according to some embodiments of the present application; and
FIG. 14 is an exploded view 3 of a battery according to some embodiments of the present application.

### Reference numerals:

1000. vehicle;
1. battery;
100. first heat exchange member; 100b. second top surface; 100d. edge; 10. first heat exchange flow channel; 11. first heat exchange section; 111. first heat exchange portion; 112. first bent portion; 12. second heat exchange section; 120. u-shaped region; 121. second heat exchange portion; 122. third heat exchange portion; 123. second bent portion; 124. third bent portion; 125. fourth heat exchange portion; 126. sixth bent portion; 13. third heat exchange section; 14. fourth bent portion; 15. first access section; 17. second access section; 18. seventh bent portion;
200. case body; 200a. third cavity; 200b. bottom wall; 200c. surrounding wall; 201. first case body; 202. second case body; 21. accommodating cavity; 22. case shell; 22a. first opening; 22b. second opening; 23. bottom panel; 24. top panel; 25. fixing member; 251. first fixing member; 252. second fixing member; 27. protective plate; 28. filler; 28a. first top surface; 28b. mounting groove; 29. bonding member; 200b. bottom wall; 200c. surrounding wall; 2011. first case wall; 2011a. first groove; 2012. convex portion;
102. battery cell; 103. beam structure; 103a. second groove;
300. second heat exchange member; 400. third heat exchange member; and
2. controller; 3. motor; X. first direction; Y. second direction; Z. third direction.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. It is clear that the described embodiments are merely some rather than all of embodiments of the present application. All other embodiments obtained by persons of ordinary skill in the art based on the embodiments of the present application without creative efforts fall within the scope of protection of the present application.

Unless otherwise defined, all technical and scientific terms used in the present application have the same meanings as commonly understood by persons skilled in the technical field of the present application. The terms used in the filed specification in the present application are merely for an objective of describing specific embodiments, and are not intended to limit the present application. The terms "comprise", "include" and any variations thereof in the specification and claims of the present application and in the above descriptions of the accompanying drawings are intended to cover non-exclusive inclusion. The terms such as "first" and "second" in the specification and claims of the present application or the foregoing accompanying drawings are only used to distinguish between different objects, but are not used to describe a specific order or a primary and secondary relationship.

Reference to "an embodiment" in the present application means that a particular feature, structure or characteristic described in combination with the embodiment may be included in at least one embodiment of the present application. The phrase shown in various locations in the specification may not necessarily refer to a same embodiment, and is not an independent or alternative embodiment exclusive from another embodiment.

In the description of the present application, it should be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. Persons of ordinary skill in the art may understand specific meanings of the foregoing terms in the present application according to specific cases.

The term "and/or" in the present application describes only an association relationship for describing associated objects and represents that three relationships may exist. For example, A and/or B may represent the following three cases: Only A exists, both A and B exist, and only B exists. In addition, a character "I" in the present application generally indicates an "or" relationship between contextually associated objects.

In the embodiments of the present application, identical reference numerals designate identical components. For conciseness, detailed descriptions of identical components are omitted across different embodiments. It is to be understood that the dimensions including thicknesses, lengths, and widths of components illustrated in the embodiments of the present application as well as dimensions such as the overall thickness, length, and width of the integrated device shown in the accompanying drawings are provided for exemplary purposes only and shall not be construed as limiting the scope of the present application.

The term "a plurality of" as used in the present application refers to two or more (inclusive of two).

The battery cell in the present application may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell may be cylindrical, flat-shaped, cuboid-shaped, or of another shape, which is also not limited in the embodiments of the present application. Generally, battery cells are classified into three types based on encapsulating methods: columnar battery cells, prismatic battery cells, and pouch battery cells, which are also not limited in the embodiments of the present application.

A battery mentioned in embodiments of the present application is a single physical module including one or more battery cells to provide a higher voltage and a higher capacity. For example, the battery provided in the present application may include a battery module, a battery pack, or the like. The battery generally includes a case body for packaging one or more battery cells or a plurality of battery modules. The case body can prevent liquid or other foreign objects from affecting the charging or discharging of the battery cells.

The battery cell includes a housing, an electrode assembly, and an electrolyte solution. The housing is used for accommodating the electrode assembly and the electrolyte solution. The electrode assembly is formed by a positive electrode plate, a negative electrode plate, and a separator. The battery cells work mainly relying on the movement of metal ions between the positive electrode plate and the negative electrode plate. The positive electrode plate includes a positive electrode current collector and a positive electrode active substance layer, the positive electrode active substance layer is coated to a surface of the positive electrode current collector, the positive electrode current collector not coated with the positive electrode active substance layer protrudes from the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode current collector already coated with the negative electrode active substance layer, and the negative electrode current collector not coated with the negative electrode active substance layer is used as a negative electrode tab. A material of the negative electrode current collector may be copper, and the negative electrode active substance may be carbon, silicon, or the like. To ensure that no fusing occurs when a large current passed through, a plurality of positive electrode tabs are laminated, and a plurality of negative electrode tabs are laminated.

A material of the separator may be polypropylene (PP), polyethylene (PE), or the like. In addition, the electrode assembly may be either of a wound structure or a stacked structure, which is not defined in the embodiments of the present application.

In recent years, new energy vehicles have experienced leapfrog development. In the field of electric vehicles, power batteries, as the power source of electric vehicles, play an irreplaceable and critical role. A battery includes a case body and a plurality of battery cells accommodated in the case body. As a core component of a new energy vehicle, a battery is subject to stringent requirements in terms of safety and cycle life.

In a common battery, to improve the safety of the battery, a cold plate is generally disposed to radiate heat for the battery. The cold plate is connected to a case body. Typically, the cold plate is connected to the case body in an adhesive manner. However, a connection between an edge 100d of the cold plate and the case body is subject to a process constraint, and the probability of adhesive failure or inadequate adhesive compression is relatively high. Consequently, the connection reliability between the cold plate and the case body is affected, the heat exchange efficiency for the battery is affected, and the reliability of the battery is finally affected.

Based on the foregoing consideration, the objective is to resolve the problem that the cold plate and the case body are affected by a bonding process, and the bonding between the position of the edge 100d of the cold plate and the case body is unreliable, thereby affecting the reliability of the battery. The inventors design a battery, including: a case body, a battery cell, a first heat exchange member, and a fixing member. The battery cell is disposed in the case body. The first heat exchange member is fitted outside the case body. The fixing member is disposed on the case body. The fixing member is disposed close to at least one edge of the first heat exchange member and fixedly connects the first heat exchange member to the case body.

In the battery of this structure, the fixing member can be disposed close to at least one edge of the first heat exchange member, so that the at least one edge of the first heat exchange member can be fixedly connected to the case body, to improve the overall connection reliability between the edge of the first heat exchange member is located and the case body, making the connection between the overall first heat exchange member and the case body more secure, which is conducive to improving the heat exchange stability of the whole first heat exchange member for the battery, thereby further improving the reliability of the battery.

The battery disclosed in the embodiments of the present application may be used in a power consuming apparatus, for example, but not limited to, a vehicle, a ship, or an aircraft. The battery or the like disclosed in the present application may be used to form a power supply system of the power consuming apparatus. In this way, the application scope of the battery can be expanded.

Embodiments of the present application provide a power consuming apparatus using a battery as a power supply. The power consuming apparatus may be, but is not limited to, a mobile phone, a tablet computer, a laptop computer, an electric toy, an electric tool, an electric scooter, an electric vehicle, a ship, spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description in the following embodiments, an example in which a power consuming apparatus in an embodiment of the present application is a vehicle 1000 is used for description.

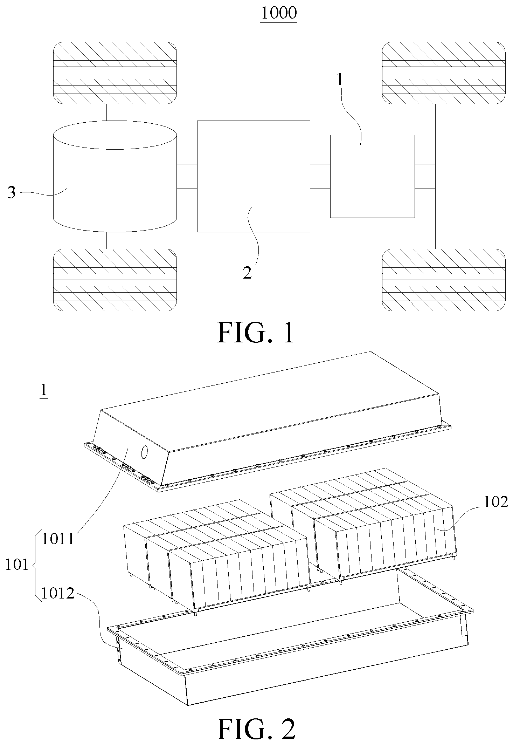

FIG. 1 is a schematic structural diagram of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 1. The battery 1 may be disposed at the bottom, head, or tail of the vehicle 1000. The battery 1 may be configured to supply power to the vehicle 1000. For example, the battery 1 may be used as a power supply for operating the vehicle 1000. The vehicle 1000 may further include a controller 2 and a motor 3. The controller 2 is configured to control the battery 1 to supply power to the motor 3, for example, to meet working power requirements during starting, navigation, and traveling of the vehicle 1000.

In some embodiments of the present application, the battery 1 can not only serve as a power supply for operating the vehicle 1000, but can also serve as a power supply for driving the vehicle 1000, in place of or partially in place of fuel or natural gas, to provide driving power for the vehicle 1000.

FIG. 2 is a structural exploded view of a battery 1 according to some embodiments of the present application. The battery 1 includes a case body 200 and a plurality of battery cells 102. The battery cells 102 are accommodated in the case body 200. The case body 200 is configured to provide an assembly space for the battery cells 102. The case body 200 may use a variety of structures. In some embodiments, the case body 200 may include a first case body 201 and a second case body 202, the first case body 201 and the second case body 202 cover each other, and the first case body 201 and the second case body 202 jointly define the assembly space for accommodating the battery cells 102. The second case body 202 may be a hollow structure that is open at one end, the first case body 201 may be a plate-like structure, and the first case body 201 covers the open side of the second case body 202, so that the first case body 201 and the second case body 202 jointly define the assembly space. Alternatively, the first case body 201 and the second case body 202 each may be a hollow structure that is open on one side, and the open side of the first case body 201 covers the open side of the second case body 202. Certainly, the case body 200 formed by the first case body 201 and the second case body 202 may be in various shapes, such as a cylinder, and a cuboid.

In the battery 1, the plurality of battery cells 102 can be connected in series, parallel, or series-parallel. Series-parallel connection means that both series connection and parallel connection exist among the plurality of battery cells 102. The plurality of battery cells 102 may be directly connected in series, parallel, or series-parallel together, and then the whole formed by the plurality of battery cells 102 may be accommodated in the case body 200. Certainly, the battery 1 may alternatively be in the form of a battery module formed by the plurality of battery cells 102 that are first connected in series, parallel, or series-parallel. A plurality of battery modules are then connected in series, parallel, or series-parallel to form a whole and accommodated in the case body 200. The battery 1 may also include other structures, for example, the battery 1 may also include a bus component for achieving the electrical connection between the plurality of battery cells 102.

FIG. 2 is a partial schematic structural diagram of a battery 1 according to some embodiments of the present application. The battery 1 includes a plurality of rows of battery cells 102. The plurality of rows of battery cells 102 are arranged in a length direction of the case body 200. Each row of battery cells 102 includes a plurality of battery cells 102 arranged in a width direction of the case body 200. Alternatively, the plurality of rows of battery cells 102 are arranged in the width direction of the case body 200. Each row of battery cells 102 includes a plurality of battery cells 102 arranged in the length direction of the case body 200.

Each battery cell 102 may be a secondary battery or a primary battery; or may be a lithium-sulfur battery, a sodium-ion battery, or a magnesium-ion battery, but is not limited thereto. The battery cell 102 may be cylindrical, flat-shaped, cuboid-shaped, or of another shape. For example, in FIG. 2, the shape of the battery cell 102 is a cuboid.

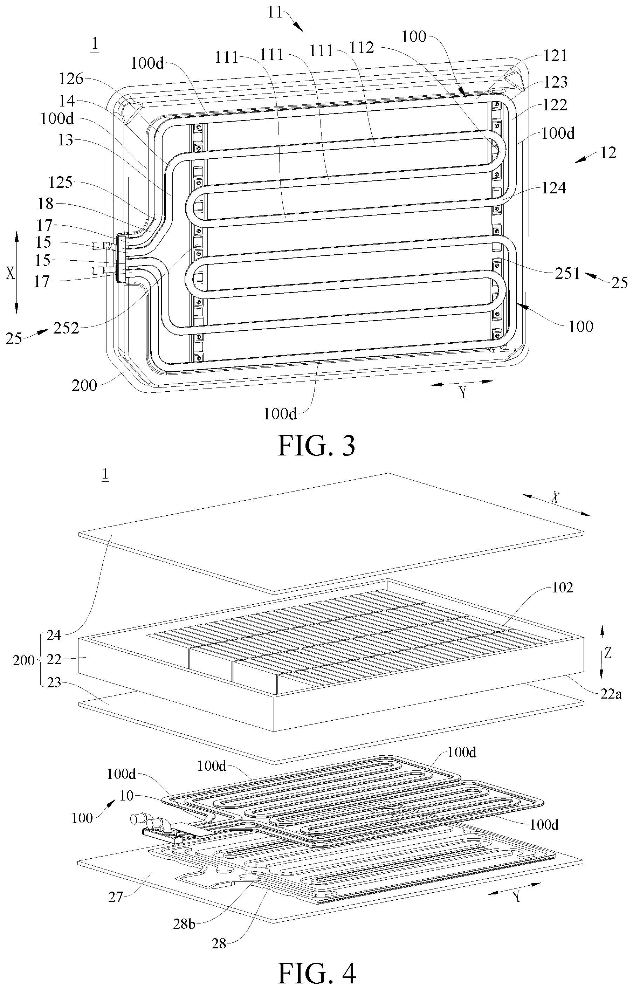

According to a first aspect, referring to FIG. 3 and FIG. 4, embodiments of the present application provide a battery 1, including a case body 200, a battery cell 102, a first heat exchange member 100, and a fixing member 25. The battery cell 102 is disposed in the case body 200. The first heat exchange member 100 is fitted outside the case body 200. The fixing member 25 is disposed on the case body 200. The fixing member 25 is disposed close to at least one edge 100d of the first heat exchange member 100 and fixedly connects the first heat exchange member 100 to the case body 200.

The case body 200 may be a housing or a chassis that includes and protects internal components. The case body 200 may be formed from materials, including, but not limited to, metal, plastic, and wood. The shape of the case body 200 may include, but is not limited to, a cube, a cuboid, and a cylinder.

The first heat exchange member 100 may be an apparatus or a component configured to transfer heat in a heat exchange process. The first heat exchange member 100 may be generally configured to transfer heat from one medium to another medium, thereby transferring and using the heat. The shape of the first heat exchange member 100 may be, but is not limited to, a rectangle, a circle, a triangle, a trapezoid, or the like. For example, the first heat exchange member 100 may be, but is not limited to, a heat sink, a cold plate, and the like.

The "edge 100d" may be a boundary or an edge of a peripheral side contour of the first heat exchange member 100. For example, when the first heat exchange member 100 is rectangular, the edge 100d may refer to four sides of the first heat exchange member 100 that define the rectangle.

The fixing member 25 may be a part, a component, or an apparatus configured to connect the first heat exchange member 100 to the case body 200. The fixing member 25 may be, but is not limited to, a mounting bracket, a hook, or the like. A connection manner between the fixing member 25 and the case body 200 may be, but is not limited to, soldering, gluing, riveting, and a snap connection.

For example, when the fixing member 25 is a mounting bracket, the first heat exchange member 100 may be fixed to the mounting bracket by a holder through a bolt connection. When the fixing member 25 is a hook, the first heat exchange member 100 may be directly snapped to the hook.

In the foregoing solution, "the first heat exchange member 100 is fitted outside the case body 200" may be understood as that the first heat exchange member 100 is arranged on an outer side of the case body 200. The first heat exchange member 100 may be fitted to any one of a top wall body, a bottom wall body, and a peripheral side wall of the case body 200. The peripheral side wall body may be a plurality of side wall bodies of peripheral walls defining the case body 200. A quantity of the side wall bodies may be, but is not limited to, 3, 4, 5, and the like. For example, when the case body 200 is a cuboid, the peripheral side wall body may include four side wall bodies. For example, referring to FIG. 3, the first heat exchange member 100 may be fitted on an outer side of the bottom wall body of the case body 200.

The first heat exchange member 100 may be connected to a wall body of the case body 200 through gluing. A portion at which at least one edge 100d of the first heat exchange member 100 is located is fixed to the case body 200 by the fixing member 25. Referring to FIG. 3, the shape of the first heat exchange member 100 may be rectangular. The first heat exchange member 100 has four edges 100d. The four edges 100d are respectively located at two ends in a first direction X and two ends in a second direction Y of the first heat exchange member 100. The fixing member 25 may be disposed corresponding to one or more of the four edges 100d.

For example, referring to FIG. 3, fixing members 25 may be disposed on the edges 100d of the first heat exchange member 100 located at two ends in the second direction Y. The fixing members 25 fix portions of the first heat exchange member 100 close to the edges 100d to the case body 200.

In the foregoing technical solution, the fixing member 25 can be disposed close to at least one edge 100d of the first heat exchange member 100, so that the at least one edge 100d of the first heat exchange member 100 can be fixedly connected to the case body 200, to improve the connection reliability between a region in which the edge 100d of the first heat exchange member 100 is located and the case body 200, making the connection between the first heat exchange member 100 and the case body 200 more secure, which is conducive to improving the heat exchange stability of the whole first heat exchange member 100 for the battery 1, thereby further improving the reliability of the battery 1.

In some embodiments of the present application, referring to FIG. 3 to FIG. 5, the first heat exchange member 100 includes a first heat exchange flow channel 10. The first heat exchange flow channel 10 includes a first heat exchange section 11 and a second heat exchange section 12. A U-shaped region 120 is formed by bending the second heat exchange section 12. The first heat exchange section 11 is bent and disposed in the U-shaped region 120 and is connected to the second heat exchange section 12 in a bent configuration. The fixing member 25 is connected to the first heat exchange section 11 and the second heat exchange section 12 and is disposed close to or corresponding to bent portions of the first heat exchange section 11 and the second heat exchange section 12.

Specifically, the battery 1 may include a plurality of battery cells 102. The first heat exchange flow channel 10 is configured to perform heat exchange with the plurality of battery cells 102 of the battery 1, so that the temperature of the battery 1 can be limited within a safe operating temperature, thereby ensuring the operational reliability of the battery 1.

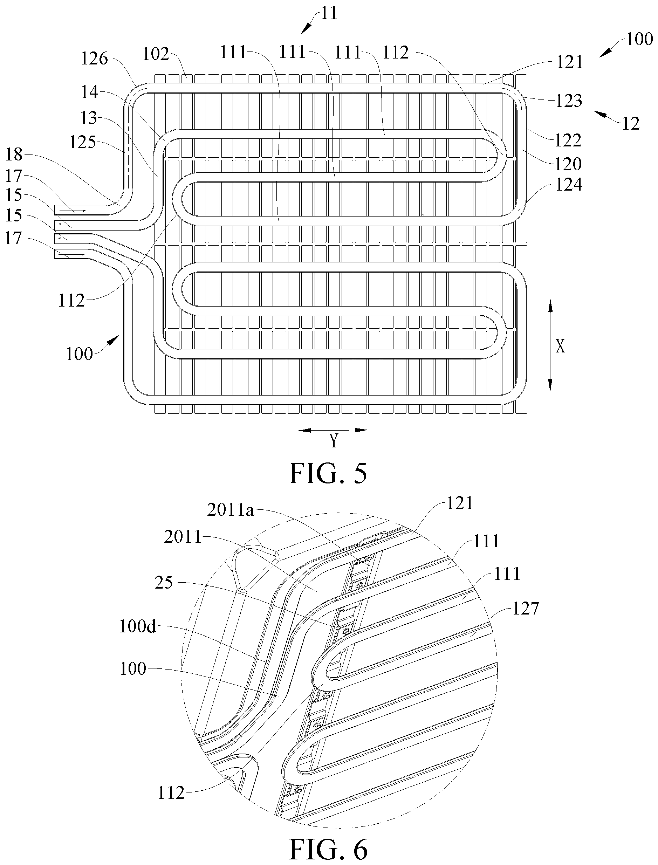

The foregoing "a U-shaped region 120 is formed by bending the second heat exchange section 12 (see the dashed line in FIG. 5). The first heat exchange section 11 is bent and disposed in the U-shaped region 120" is intended to describe that the second heat exchange section 12 is disposed at a circumferential periphery of the first heat exchange section 11, and may be arranged on three circumferential sides of the first heat exchange section 11. Compared with the first heat exchange section 11, the second heat exchange section 12 may be arranged closer to a peripheral position of the battery 1.

The U-shaped region 120 is formed by bending the second heat exchange section 12. That is, the second heat exchange section 12 extends along a U-shaped line in a direction from one end of the second heat exchange section 12 to the other end, to form the U-shaped region 120 having a U-shape.

The first heat exchange section 11 is bent and disposed in the U-shaped region 120. That is, the first heat exchange section 11 is arranged in a space defined by the second heat exchange section 12. The first heat exchange section 11 extends along a non-straight line on an inner side of the second heat exchange section 12 and has at least one bending position.

It should be noted that, in this embodiment, it is only limited that the first heat exchange section 11 is bent and disposed in the U-shaped region 120, and a bending form of the first heat exchange section 11 is not limited. That is, a specific bending form of the first heat exchange section 11 may be designed according to a heat exchange requirement of the battery 1. For example, the first heat exchange section 11 may extend along a length direction (that is, the first direction X in FIG. 5) of the battery cell 102, after extending to a particular length, bend toward a width direction (that is, the second direction Y in FIG. 5) of the battery cell 102, and then continue to extend along the length direction of the battery cell 102 and bend along the width direction. Alternatively, the first heat exchange section 11 may extend along the width direction of the battery cell 102, after extending to a particular length, bend toward the length direction of the battery cell 102, and then continue to extend along the width direction of the battery cell 102 and bend along the length direction.

The first heat exchange section 11 is bent and connected to the second heat exchange section 12. That is, one end of the first heat exchange section 11 is connected to one end of the second heat exchange section 12, and a connection position between the first heat exchange section 11 and the second heat exchange section 12 has a bent nonlinear structure. For example, the connection position between the first heat exchange section 11 and the second heat exchange section 12 may be bent into an arc section.

The first heat exchange section 11 is connected to the second heat exchange section 12. In this way, one of an end of the first heat exchange section 11 that is far away from the second heat exchange section 12 and an end of the second heat exchange section 12 that is far away from the first heat exchange section 11 may be used as a liquid inlet end, and the other may be used as a liquid outlet end. Therefore, when heat exchange is performed in the first heat exchange flow channel 10, a heat exchange medium may flow from the first heat exchange section 11 to the second heat exchange section 12, or may flow from the second heat exchange section 12 to the first heat exchange section 11.

It may be understood that in a process in which the heat exchange fluid flows in the first heat exchange flow channel 10, a temperature of the heat exchange fluid gradually changes, causing a gradually reduced heat exchange effect. For example, when the first heat exchange member 100 cools the battery 1, the heat of the battery cell 102 is gradually transferred to the heat exchange fluid, so that the temperature of the heat exchange fluid gradually increases in a process of flowing along the first heat exchange flow channel 10, a temperature difference between the heat exchange fluid and the battery cell 102 gradually decreases, and the heat exchange efficiency gradually decreases. When the first heat exchange member 100 heats the battery 1, the heat in the heat exchange fluid is gradually transferred to the battery cell 102, so that the temperature of the heat exchange fluid gradually decreases in a process of flowing along the first heat exchange flow channel 10, a temperature difference between the heat exchange fluid and the battery cell 102 gradually decreases, and the heat exchange efficiency gradually decreases.

In this embodiment, when the first heat exchange member 100 cools the battery 1, the heat exchange fluid may alternatively flow from the first heat exchange section 11 to the second heat exchange section 12. However, the heat exchange fluid may alternatively flow from the second heat exchange section 12 to the first heat exchange section 11. When the heat exchange fluid also flows from the first heat exchange section 11 to the second heat exchange section 12, the battery cells 102 located at middle positions of the battery 1 (that is, an internal battery cell 102 located on an inner side the periphery) may be first cooled, and then the battery cell 102 located at peripheral positions of the battery 1 are cooled. Because heat dissipation of the battery cells 102 located at the peripheral positions of the battery 1 is better than heat dissipation of the internal battery cells 102, a heat exchange fluid having a low temperature in the first heat exchange section 11 may better satisfy heat dissipation requirements of the battery cells 102 located at the middle positions of the battery 1. In addition, because the battery cells 102 located at the peripheral positions may naturally dissipate heat directly toward the external environment, when the temperature of the heat exchange fluid in the second heat exchange section 12 is slightly higher, heat dissipation requirements of the peripheral battery cells 102 can still be satisfied, so that the battery cells 102 at the peripheral positions of the battery 1 have a roughly consistent cooling effect with the battery cells 102 at the middle positions of the battery 1, and further, the battery cells 102 at the peripheral positions of the battery 1 have relatively consistent temperatures with the battery cells 102 at the middle positions of the battery 1 after the battery cells 102 are cooled through heat dissipation, so that the temperature distribution in the battery 1 is more uniform.

When the first heat exchange member 100 heats the battery 1, the heat exchange fluid may alternatively flow from the first heat exchange section 11 to the second heat exchange section 12. However, the heat exchange fluid may alternatively flow from the second heat exchange section 12 to the first heat exchange section 11. For example, when flowing from the second heat exchange section 12 to the first heat exchange section 11, the heat exchange fluid may first heat the battery cells 102 at the periphery of the battery 1. The heat exchange fluid then cools the battery cells 102 at the middle positions of the battery 1. Because the battery cells 102 at the periphery of the battery 1 greatly radiates heat to the external environment, the temperatures of the battery cells 102 at the periphery of the battery 1 are more likely to decrease. The heat exchange fluid first heats the battery cells 102 at the periphery of the battery 1, and the heat exchange fluid with a high temperature may increase the temperatures of the peripheral battery cells 102, to make up for heat lost by the battery cell 102 through heat radiation to the external environment, to meet a heating requirement of the battery cell 102. The battery cells 102 at the middle positions of the battery 1 have small contact areas with the external environment, and have a small heat loss. The heat exchange fluid with a low temperature flowing in the first heat exchange section 11 can adequately meet the heating requirement of the battery cells 102 with the heat generated by the battery cells 102. Therefore, the battery cells 102 at the periphery of the battery 1 and the battery cells 102 at the middle positions of the battery 1 have substantially consistent heating effects, so that the battery cells 102 at the periphery of the battery 1 and the battery cells 102 at the middle positions of the battery 1 have relatively consistent temperatures after the heating, thereby achieving more uniform temperature distribution in the battery 1.

Because the first heat exchange section 11 and the second heat exchange section 12 have a bent structure, the bent portions of the first heat exchange section 11 and the second heat exchange section 12 may be edge positions of the first heat exchange section 11 and the second heat exchange section 12. In addition, because the first heat exchange section 11 and the second heat exchange section 12 are usually connected to the case body 200 through bonding, due to the impact of a bonding process, outer sides of the bent portion of the first heat exchange section 11 and the second heat exchange section 12 are less constrained than regions on central sides of the first heat exchange section 11 and the second heat exchange section 12, and the probability of adhesive failure or inadequate adhesive compression is high. In the present application, the fixing member 25 may be connected to the bent portions of the first heat exchange section 11 and the second heat exchange section 12, or may be disposed close to the bent portions of the first heat exchange section 11 and the second heat exchange section 12. Therefore, the fixing member 25 can add a constraint and limitation effect to the bent portions of the first heat exchange section 11 and the second heat exchange section 12, thereby reducing the probability of adhesive failure or inadequate adhesive compression between the bent portions of the first heat exchange section 11 and the second heat exchange section 12 and the case body 200, improving the heat exchange reliability of the first heat exchange section 11 and the second heat exchange section 12, and improving the reliability of the battery 1.

In the foregoing technical solution, the U-shaped region 120 is formed by bending the second heat exchange section 12. The first heat exchange section 11 is bent and disposed in the U-shaped region 120. When the first heat exchange member 100 exchanges heat with the battery 1, the U-shaped region 120 formed by the peripheral second heat exchange section 12 may be opposite to peripheral battery cells 102 of the battery 1, and the first heat exchange section 11 in the U-shaped region 120 may be opposite to inner battery cells 102, so that the first heat exchange member 100 may make up for a temperature difference between the inside and outside caused by heat exchange between the peripheral battery cells 102 and the environment, to make heat exchange effects of the peripheral battery cells 102 of the battery 1 and the inner battery cells 102 of the battery 1 tend to be consistent, thereby improving the temperature uniformity of the battery 1, and improving the service life of the battery 1 to some extent. The fixing member 25 can restrict and limit regions in which the bent portions of the first heat exchange section 11 and the second heat exchange section 12 are located, thereby improving the connection reliability between the bent portions of the first heat exchange section 11 and the second heat exchange section 12 and the case body 200, and improving the operational reliability of the first heat exchange section 11 and the second heat exchange section 12, which is conducive to improving the reliability of the battery 1.

According to some embodiments of the present application, as shown in FIG. 5, the second heat exchange section 12 may be located on an outermost side in a circumferential direction of the first heat exchange flow channel 10.

That is, the second heat exchange section 12 is formed as an outermost flow channel of the first heat exchange flow channel 10. In this way, the second heat exchange section 12 may be configured to perform heat exchange with the battery cells 102 at the periphery of the battery 1, to improve the temperature uniformity of the battery cells 102 at the periphery of the battery 1.

In the foregoing technical solution, the second heat exchange section 12 is disposed on the outermost side in the circumferential direction of the first heat exchange flow channel 10, so that the second heat exchange section 12 can perform heat exchange on the battery cells 102 on an outer side in the circumferential direction of the battery 1, which is conducive to improving a temperature difference between the inside and outside caused by heat exchange between the battery 1 and the environment, and prolonging the service life of the battery 1 to some extent.

According to some embodiments of the present application, the first heat exchange section 11 and the second heat exchange section 12 may be bent in the same plane.

In the foregoing technical solution, the first heat exchange section 11 and the second heat exchange section 12 are disposed bent in the same plane, so that the first heat exchange flow channel 10 can perform heat exchange on the battery 1 in the same plane. In this way, the structure of the first heat exchange flow channel 10 can be simplified, thereby reducing the production difficulty of the first heat exchange flow channel 10, and a space occupied by the first heat exchange flow channel 10 can be reduced, thereby improving the volumetric energy density of the battery 1.

In some embodiments of the present application, referring to FIG. 3 and FIG. 5, the first heat exchange section 11 includes a first heat exchange portion 111 and a first bent portion 112. A plurality of first heat exchange portions 111 are provided. The plurality of first heat exchange portions 111 are disposed at intervals in a first direction X and are successively connected by the first bent portion 112. Each first heat exchange portion 111 extends along a second direction Y. The second direction Y is disposed at an angle with respect to the first direction X. The first bent portion 112 is arc-shaped. The fixing member 25 is connected to the first bent portion 112 or a portion of the first heat exchange portion 111 close to the first bent portion 112.

That is, the plurality of first heat exchange portions 111 are successively connected, and a connection position of two connected first heat exchange portions 111 is bent. For example, the two connected first heat exchange portions 111 may be bent along a fold line, or may be bent along an arc. Two, three, four, five, or more first heat exchange portions 111 may be provided.

It should be noted that the first heat exchange portion 111 may have various shapes. For example, the first heat exchange portion 111 may be a straight-line shape, an arc shape, or the like. The first heat exchange portion 111 may also extend in various directions. For example, the first heat exchange portion 111 may extend along a length direction or a thickness direction of the battery cell 102. In this way, the plurality of first heat exchange portions 111 are successively bent and connected, so that the first heat exchange section 11 can form the heat exchange flow channel in a form of an S shape, an inverted U shape, a V shape, or the like.

In the foregoing technical solution, on one hand, the plurality of first heat exchange portions 111 are disposed, so that the heat exchange area of the first heat exchange section 11 can be increased, to increase the heat exchange area of the first heat exchange flow channel 10, thereby improving the heat exchange effect of the first heat exchange flow channel 10. On the other hand, inner battery cells are wrapped by outer battery cells, and temperature differences between the inner battery cells are not large. Therefore, the plurality of first heat exchange portions 111 are disposed to ensure the overall heat exchange effect while ensuring small temperature differences between the inner battery cells and the outer battery cells.

"The first direction X and the second direction Y are disposed at an angle" is intended to describe that the first direction X and the second direction Y may be arranged vertically, or may be arranged only to intersect with each other in a non-vertical configuration. For example, the first direction and the second direction may be arranged at an angle of 30°, 60°, 80°, 120°, 150°, or 170°. For example, as shown in FIG. 5, the first direction X is the length direction of the battery cell 102, the second direction Y is the thickness direction of the battery cell 102, and the first heat exchange portions 111 extend along the length direction of the battery cell 102 and are arranged at intervals in the thickness direction of the battery cell 102. In this way, the plurality of first heat exchange portions 111 are bent and connected to each other to form an S-shaped heat exchange flow channel, so that heat exchange can be performed on the plurality of battery cells 102.

The first bent portion 112 is arc-shaped, that is, the first bent portion 112 extends along an arc, and an angle exists between flow directions of the fluid at the two ends of the first bent portion 112. Therefore, the first bent portion 112 may change the flow direction of the fluid, so that the two connected first heat exchange portions 111 can be arranged extending in a preset region, thereby increasing the heat exchange area of the first heat exchange section 11 and improving the heat exchange efficiency of the first heat exchange section 11. In addition, the first bent portion 112 has an arc shape. The arc shape may reduce the flow resistance of the fluid and reduce a pressure drop, thereby improving the flow rate of the fluid, and further improving the heat exchange efficiency of the first heat exchange section 11.

Further, one, two, three, or more first bent portions 112 may be provided. The first bent portion 112 can allow a serpentine arrangement of the first heat exchange section 11, so that the heat exchange area of the first heat exchange flow channel 10 can be increased, thereby improving the heat exchange efficiency of the first heat exchange flow channel 10.

Optionally, as shown in FIG. 3 and FIG. 5, the first bent portion 112 may have a semi-circular arc shape.

That is, the first bent portion 112 may extend along a semi-circular arc. Specifically, the first bent portion 112 may extend along a semi-circular arc protruding away from two first heat exchange portions 111 connected to the first bent portion 112. An angle between an entrance and an exit of the first bent portion 112 is 180°, and flow directions at the exit and the entrance of the first bent portion 112 are opposite. In this way, two adjacent first heat exchange portions 111 are closer to each other, and the structure of the entire first heat exchange section 11 is more compact and reliable. The first bent portion 112 is configured to connect two first heat exchange portions 111 that are parallel to each other and that are spaced apart. In another embodiment, a bending degree of the first bent portion 112 may alternatively be adjusted as required, and may be, for example, 150°, 135°, or the like. This is not limited in the embodiments of the present application.

The two first heat exchange portions 111 may be connected by the first bent portion 112 to form a "U"-shaped heat exchange channel. The first heat exchange section 11 may include one or more "U"-shaped heat exchange channels. The plurality of "U"-shaped heat exchange channels are successively connected, and the connected "U"-shaped heat exchange channels are connected by the first bent portion 112.

In the foregoing embodiment, the first bent portion 112 is configured to have a semi-circular arc shape, so that the design diversity of the heat exchange flow channel can be increased, thereby improving the adaptability between the first heat exchange member 100 and the battery 1. In addition, the semi-circular arc structure is relatively simple, thereby reducing the production difficulty of the first heat exchange member 100 and improving the production speed of the first heat exchange member 100.

The fixing member 25 may be connected to the first bent portion 112 or may be connected to a portion of the first heat exchange portion 111 close to the first bent portion 112. Regardless of the foregoing manner, the fixing member 25 can fix the first heat exchange portion 111 on the case body 200, so that the reliability of the first heat exchange portion 111 and the first bent portion 112 can be improved, thereby facilitating the smooth flow of the heat exchange fluid in the first heat exchange portion 111 and the first bent portion 112.

In the foregoing technical solution, the first heat exchange portion 111 is arranged to linearly extend along the second direction Y, so that the production difficulty of the first heat exchange portion 111 can be reduced, thereby reducing the production complexity of the first heat exchange flow channel 10. In addition, the straight tube can further improve the flow speed of a heat exchange fluid, thereby improving the heat exchange effect of the first heat exchange flow channel 10. The first bent portion 112 is disposed, so that the flow direction of the fluid inside the first heat exchange section 11 can be changed, a smooth transition connection between two first heat exchange portions 111 is implemented, and the serpentine extension of the first heat exchange flow channel 10 is implemented. Therefore, a contact area between a single battery cell 102 and the first heat exchange flow channel 10 can be increased, thereby increasing a heat exchange area, and improving heat exchange efficiency of the first heat exchange flow channel 10. In addition, the arc shape of the first bent portion 112 can further reduce the flow resistance of the fluid and reduce a pressure drop, thereby improving the flow rate of the fluid, and further improving heat exchange efficiency of the first heat exchange section 11. In addition, the first bent portion 112 is arranged, so that the first heat exchange section 11 has a more compact structure, and occupies a smaller overall space. This is more conducive to the miniaturized design of the battery 1, and ensures the volumetric energy density of the battery 1. The first bent portion 112 or the portion of the first heat exchange portion 111 close to the first bent portion 112 by the fixing member 25, so that the reliability of the first heat exchange portion 111 and the first bent portion 112 can be improved, thereby improving the heat exchange stability for the battery cell 102, which is conducive to improving the reliability of the battery 1.

In some embodiments of the present application, referring to FIG. 3 and FIG. 5, a plurality of fixing members 25 are provided and are disposed at least on two sides of the first heat exchange section 11 in the second direction Y. Each fixing member 25 extends along the first direction X and is connected to at least one adjacent first bent portion 112 and/or the portion of the first heat exchange portion 111 close to the first bent portion 112.

A quantity of the fixing members 25 may be, but is not limited to, 2, 3, 4, 5, and the like. At least two of the plurality of fixing members 25 are respectively disposed on two sides of the first heat exchange section 11 in the second direction Y, so that the two sides of the first heat exchange section 11 in the second direction Y can be fixed. The fixation of the first heat exchange section 11 and the case body 200 is more reliable, which is conducive to improving the heat exchange stability of the first heat exchange section 11 for the battery cell 102.

For example, the second direction Y may be a length direction of the first heat exchange section 11. Therefore, the fixing members 25 may be disposed at two ends of the length direction of the first heat exchange section 11, to improve the connection reliability between the first heat exchange section 11 and the case body 200. More than three fixing members 25 may alternatively be provided. That is, the fixing members 25 may be disposed at two ends of the first heat exchange section 11 in the length direction and also at a middle position of the first heat exchange section 11, thereby further improving the connection reliability between the first heat exchange section 11 and the case body 200.

The fixing member 25 extends along the first direction X, and therefore the fixing member 25 has an elongated shape. Because the first heat exchange section 11 includes the first bent portion 112 and the plurality of first heat exchange portions 111, two adjacent first heat exchange portions 111 are connected to each other by the first bent portion 112, and the first heat exchange portions 111 extend along the second direction Y. In this way, each fixing member 25 can simultaneously fix a plurality of first heat exchange portions 111 simultaneously, so that a quantity of the fixing members 25 can be reduced, to reduce the assembly difficulty, thereby improving the assembly efficiency.

The fixing member 25 may be connected to one or more first bent portions 112 at adjacent positions. The fixing member 25 may alternatively be connected to a portion of the one or more first heat exchange portions 111 close to the first bent portion 112. The fixing member 25 may alternatively be connected to several of the plurality of first bent portions 112 and portions of the plurality of first heat exchange portions 111 close to the first bent portions 112.

In the foregoing technical solution, the plurality of fixing members 25 are disposed, and the plurality of fixing members 25 are disposed at least on two sides of the first heat exchange section 11 in the second direction Y. In this way, the fixing positions of the first heat exchange section 11 to the case body 200 can be increased, thereby improving the connection reliability between the first heat exchange section 11 and the case body 200, reducing the probability that the first heat exchange section 11 is separated from the case body 200 or has inadequate adhesive compression, and further improving the overall reliability of the battery 1. The fixing member 25 extends along the first direction X and is connected to at least one adjacent first bent portion 112 and/or the portion of the first heat exchange portion 111 close to the first bent portion 112. In this way, each fixing member 25 can simultaneously fix a plurality of first heat exchange portions 111, so that a quantity of fixing members 25 can be reduced, assembly steps can be reduced, assembly efficiency can be improved, and the time for producing and manufacturing the battery 1 can be reduced.

In some embodiments of the present application, referring to FIG. 3 and FIG. 5, the second heat exchange section 12 includes a second heat exchange portion 121, a third heat exchange portion 122, a fourth heat exchange portion 125, a second bent portion 123, and a third bent portion 124. The second heat exchange portion 121 extends along a first lateral peripheral edge of the first heat exchange section 11. The third heat exchange portion 122 is connected between the second heat exchange portion 121 and the first heat exchange section 11 and extends along a second lateral peripheral edge of the first heat exchange section 11. A first end of the third heat exchange portion 122 is connected to the second heat exchange portion 121 at an angle. A second end of the third heat exchange portion 122 is connected to the first heat exchange section 11 at an angle. The fourth heat exchange portion 125 is in communication with the second heat exchange portion 121, is connected to the second heat exchange portion 121 at an angle, and extends along a third lateral peripheral edge of the first heat exchange section 11. The second bent portion 123 and the third bent portion 124 are both arc-shaped. The second bent portion 123 is connected between the first end of the third heat exchange portion 122 and the second heat exchange portion 121. The third bent portion 124 is connected between the second end of the third heat exchange portion 122 and the first heat exchange section 11. The fixing member 25 is connected to the second bent portion 123 or a portion of the second heat exchange portion 121 close to the second bent portion 123. The fixing member 25 is connected to the third bent portion 124 or a portion of the first heat exchange section 11 close to the third bent portion 124.

It may be understood that the fourth heat exchange portion 125 is connected to an end of the second heat exchange portion 121 away from the third heat exchange portion 122. The fourth heat exchange portion 125, the second heat exchange portion 121, and the third heat exchange portion 122 are successively connected to form the U-shaped region 120. The first heat exchange section 11 is arranged in the U-shaped region 120 and is connected to an end of the third heat exchange portion 122 away from the second heat exchange portion 121.

The first end of the third heat exchange portion 122 is connected to the second heat exchange portion 121 at an angle. That is, the third heat exchange portion 122 is connected to the second heat exchange portion 121. The third heat exchange portion 122 and the second heat exchange portion 121 are not collinear and not parallel, but are arranged at an angle greater than 0° and less than 180°. For example, the third heat exchange portion 122 is connected to the second heat exchange portion 121 at angle of 30°, 45°, 60°, 90°, 120°, 135°, 150°, or the like.

The second end of the third heat exchange portion 122 is connected to the first heat exchange section 11 at an angle. That is, the second end of the third heat exchange portion 122 is connected to the second heat exchange portion 121, and the second end of the third heat exchange portion 122 and the first heat exchange section 11 are arranged at an angle greater than 0° and less than 180°. For example, the second end of the third heat exchange portion 122 is connected to the first heat exchange section 11 at an angle of 30°, 45°, 60°, 90°, 120°, 135°, 150°, or the like.

The fourth heat exchange portion 125 is in communication with the second heat exchange portion 121, and is connected to the second heat exchange portion 121 at an angle. That is, the fourth heat exchange portion 125 is connected to the second heat exchange portion 121 and is arranged at an angle greater than 0° and less than 180°. For example, the fourth heat exchange portion 125 is connected to the second heat exchange portion 121 at angle of 30°, 45°, 60°, 90°, 120°, 135°, 150°, or the like.

It should be noted that, in this embodiment, the second heat exchange section 12 is defined to be arranged on three sides of the first heat exchange section 11 in the circumferential direction, and specific positions of the second heat exchange portion 121, the third heat exchange portion 122, and the fourth heat exchange portion 125 with respect to the first heat exchange section 11 are not defined. Therefore, specific positions of the second heat exchange portion 121, the third heat exchange portion 122, and the fourth heat exchange portion 125 may be designed according to actual requirements. For example, if the second heat exchange portion 121 may be arranged on a side of the first heat exchange section 11 in the first direction, the third heat exchange portion 122 and the fourth heat exchange portion 125 are respectively arranged on two sides of the first heat exchange section 11 in the second direction. If the second heat exchange portion 121 is arranged on a side of the first heat exchange section 11 in the second direction, the third heat exchange portion 122 and the fourth heat exchange portion 125 are respectively arranged on two sides of the first heat exchange section 11 in the first direction.

The second bent portion 123 and the third bent portion 124 are respectively configured to connect the second heat exchange portion 121 to the third heat exchange portion 122 and the third heat exchange portion 122 to the first heat exchange portion 111. The second bent portion 123 is arc-shaped. That is, the second bent portion 123 extends along an arc, and an angle exists between flow directions of the fluid at two ends of the second bent portion 123. The third bent portion 124 is arc-shaped. That is, the third bent portion 124 extends along an arc, and an angle exists between flow directions of the fluid at two ends of the third bent portion 124.

Therefore, the second bent portion 123 and the third bent portion 124 may cause the flow direction of the heat exchange fluid to change, so that the second heat exchange section 12 extends in a preset region and is configured to perform heat exchange with the battery cell 102. In addition, the arc-shaped second bent portion 123 and third bent portion 124 can reduce the flow resistance of the fluid and reduce a pressure drop. In this way, the flow rate of the heat exchange fluid can be improved, thereby further improving the heat exchange efficiency of the first heat exchange flow channel 10.

In the foregoing embodiment, the second bent portion 123 and the third bent portion 124 are disposed, so that the flow direction of the fluid in the first heat exchange flow channel 10 may be changed, to implement a smooth transition connection between the third heat exchange portion 122 and the second heat exchange portion 121, and implement a smooth transition connection between the third heat exchange portion 122 and the first heat exchange portion 111. Therefore, the second bent portion 123 and the third bent portion 124 can reduce the flow resistance of the fluid flowing in the second heat exchange section 12, reduce a pressure drop, and improve the flow rate of the heat exchange fluid, thereby further improving the heat exchange efficiency of the first heat exchange flow channel 10.

Optionally, referring to FIG. 3 and FIG. 5, the second bent portion 123 may be a quarter-circular arc.

That is, the second bent portion 123 may extend along a semi-circular arc. Specifically, the first bent portion 112 may extend along a quarter-circular arc protruding away from the first connection section. An angle between an entrance and an exit of the second bent portion 123 may be 90°. The second bent portion 123 is analogous to a 90° elbow in piping materials, and may change a flow channel direction, so that after the fluid passes through the second bent portion 123, the flow direction of the fluid is changed by 90°.

Further, the second bent portion 123 connects the second heat exchange portion 121 to the third heat exchange portion 122. In this case, the second heat exchange portion 121 and the third heat exchange portion 122 are arranged perpendicular to each other.

Optionally, the second bent portion 123 may alternatively be a semi-circular arc. That is, the second bent portion 123 may extend along a semi-circular arc, an angle between an entrance and an exit of the second bent portion 123 is 180°, and flow directions at the entrance and the exit of the second bent portion 123 are opposite. In this way, the third heat exchange portion 122 is closer to the second heat exchange portion 121, and the structure of the entire second heat exchange section 12 is more compact and reliable. In another embodiment, a bending degree of the second bent portion 123 may alternatively be adjusted as required, and may be, for example, 150°, 135°, or the like. This is not limited in the embodiments of the present application.

Closer, the structure of the entire first heat exchange section 11 is more compact and reliable. The first bent portion 112 is configured to connect two first heat exchange portions 111 that are parallel to each other and that are spaced apart. In another embodiment, a bending degree of the first bent portion 112 may alternatively be adjusted as required, and may be, for example, 150°, 135°, or the like. This is not limited in the embodiments of the present application.

Optionally, referring to FIG. 3 and FIG. 5, the third bent portion 124 is a quarter-circular arc.

That is, the third bent portion 124 may extend along a semi-circular arc. Specifically, the third bent portion 124 may extend along a quarter-circular arc protruding away from the first connection section. An angle between an entrance and an exit of the third bent portion 124 is 90°. The third bent portion 124 is analogous to a 90° elbow in piping materials, and may change a flow channel direction, so that after the fluid passes through the third bent portion 124, the flow direction of the fluid is changed by 90°.

Further, the third bent portion 124 connects the third heat exchange portion 122 to the first heat exchange portion 111. In this case, the third heat exchange portion 122 and the first heat exchange portion 111 are arranged perpendicular to each other.

In the foregoing embodiment, the third bent portion 124 is configured to be a quarter-circular arc to enable the flow direction of the fluid to change from an original flow direction to a direction perpendicular to the original flow direction after the fluid passes through the third bent portion 124. In addition, the third bent portion 124 of the arc shape can further reduce the flow resistance of the fluid, so that the fluid can smoothly flow in the third bent portion 124, thereby effectively preventing excessively slow flow of the fluid that consequently degrades heat exchange efficiency.

Optionally, the third bent portion 124 may alternatively be a semi-circular arc. That is, the third bent portion 124 may extend along a semi-circular arc, an angle between an entrance and an exit of the third bent portion 124 is 180°, and flow directions at the entrance and the exit of the third bent portion 124 are opposite. In this way, the third heat exchange portion 122 is closer to the first heat exchange section 11, and the structure of the first heat exchange section 11 and the second heat exchange section 12 is more compact and reliable. In another embodiment, a bending degree of the third bent portion 124 may alternatively be adjusted as required, and may be, for example, 150°, 135°, or the like. This is not limited in the embodiments of the present application.

It may be understood that the fixing member 25 is connected to the second bent portion 123 or the portion of the second heat exchange portion 121 close to the second bent portion 123. It may be understood that the fixing member 25 may be connected to the second bent portion 123. Alternatively, the fixing member 25 may be connected to the portion of the second heat exchange portion 121 close to the second bent portion 123. Therefore, the fixing member 25 can improve the connection reliability between the case body 200 and regions adjacent to the second heat exchange portion 121 and the second bent portion 123, thereby improving the stability of liquid flowing in the second heat exchange portion 121 and the second bent portion 123, and improving the heat exchange reliability of portions at which the second heat exchange portion 121 and the second bent portion 123 are located.

It may be understood that the fixing member 25 is connected to the third bent portion 124 or the portion of the first heat exchange section 11 close to the third bent portion 124. It may be understood that the fixing member 25 may be connected to the third bent portion 124. Alternatively, the fixing member 25 may be connected to the portion of the first heat exchange section 11 close to the third bent portion 124. Therefore, the fixing member 25 can improve the connection reliability between the case body 200 and regions adjacent to the first heat exchange section 11 and the third bent portion 124, thereby improving the stability of liquid flowing in the first heat exchange section 11 and the third bent portion 124, and improving the heat exchange reliability of portions at which the first heat exchange section 11 and the third bent portion 124 are located.

In the foregoing technical solution, the second heat exchange portion 121, the third heat exchange portion 122, and the fourth heat exchange portion 125 are respectively arranged on three sides of the first heat exchange section 11, so that the second heat exchange section 12 can surround the first heat exchange section 11, thereby increasing the compactness of arrangement of the first heat exchange flow channel 10, and achieving a miniaturized structure of the first heat exchange flow channel 10, which is conducive to ensuring the volumetric energy density of the battery 1. In addition, the structure of the first heat exchange flow channel 10 can be simplified, thereby facilitating the processing and production of the first heat exchange member 100. The second bent portion 123 is disposed to enable the flow direction of the fluid to change from an original flow direction to a direction perpendicular to the original flow direction after the fluid passes through the second bent portion 123. In addition, the arc shape can further reduce the flow resistance of the fluid, so that the fluid can smoothly flow in the second bent portion 123, thereby effectively preventing excessively slow flow of the fluid that consequently degrades heat exchange efficiency. The second bent portion 123 or the portion of the second heat exchange portion 121 close to the second bent portion 123 is connected by the fixing member 25, and the third bent portion 124 or the portion of the first heat exchange section 11 close to the third bent portion 124 is connected by the fixing member 25. In this way, the connection reliability between the case body 200 and a region where the second bent portion 123 and the second heat exchange portion 121 are adjacent and a region where the third bent portion 124 and the first heat exchange section 11 are adjacent can be improved, and the stability of the heat exchange fluid flowing through the second heat exchange portion 121, the second bent portion 123, the third bent portion 124, and the first heat exchange section 11 can be improved, which is conducive to improving the heat exchange reliability of the first heat exchange member 100 on the battery cell 102, thereby improving the reliability of the battery 1.

In some embodiments of the present application, referring to FIG. 3 and FIG. 5, the first heat exchange section 11 includes a plurality of first heat exchange portions 111. The plurality of first heat exchange portions 111 are successively connected in the first direction X in a bent configuration. Each first heat exchange portion 111 extends along the second direction Y. The second direction Y is disposed at an angle with respect to the first direction X. The first heat exchange flow channel 10 further includes a third heat exchange section 13 and a fourth bent portion 14. The third heat exchange section 13 is arranged on a side of the first heat exchange section 11 facing away from the third heat exchange portion 122. The third heat exchange section 13 is connected to one of the plurality of first heat exchange portions 111 that is closest to the second heat exchange portion 121 in the first direction X. The fourth bent portion 14 is arc-shaped and is connected between the third heat exchange section 13 and the first heat exchange portion 111. The fixing member 25 is connected to the fourth bent portion 14 or a portion of the first heat exchange portion 111 close to the fourth bent portion 14.

That is, in the first heat exchange flow channel 10, the second heat exchange section 12, the first heat exchange section 11, and the third heat exchange section 13 are successively connected. The heat exchange fluid may flow from the second heat exchange section 12 to the third heat exchange section 13 through the first heat exchange section 11, or may flow from the third heat exchange section 13 to the second heat exchange section 12 through the first heat exchange section 11.

The third heat exchange section 13 is connected to the first heat exchange section 11 and is arranged at an angle greater than 0° and less than or equal to 180°. For example, an angle between the third heat exchange section 13 and the first heat exchange section 11 is 30°, 45°, 60°, 90°, 120°, 135°, 150°, or the like.

The fourth bent portion 14 is arc-shaped, that is, the fourth bent portion 14 extends along an arc, and an angle exists between flow directions of the fluid at the two ends of the fourth bent portion 14. Therefore, the fourth bent portion 14 may change the flow direction of the fluid, so that the third heat exchange section 13 can extend along a preset direction. In addition, the arc shape may reduce the flow resistance of the fluid and reduce a pressure drop, thereby improving the flow rate of the fluid, and further improving the heat exchange efficiency of the first heat exchange flow channel 10.

Optionally, the fourth bent portion 14 may be a semi-circular arc. That is, the fourth bent portion 14 may extend along a semi-circular arc, an angle between an entrance and an exit of the fourth bent portion 14 is 180°, and flow directions at the entrance and the exit of the fourth bent portion 14 are opposite. In this way, the third heat exchange section 13 is closer to the first heat exchange portion 111, and the structure of the third heat exchange section 13 and the first heat exchange portion 111 is more compact and reliable. In another embodiment, a bending degree of the fourth bent portion 14 may alternatively be adjusted as required, and may be, for example, 150°, 135°, or the like. This is not limited in the embodiments of the present application.

In the foregoing embodiment, the fourth bent portion 14 is disposed, so that the flow direction of the fluid between the third heat exchange section 13 and the first heat exchange portion 111 can be changed. In addition, the fourth bent portion 14 of the arc shape may reduce the flow resistance of the fluid and reduce a pressure drop, thereby improving the flow rate of the fluid, and further improving the heat exchange efficiency of the first heat exchange flow channel 10.

In some embodiments, referring to FIG. 3 and FIG. 5, the fourth bent portion 14 is a quarter-circular arc.

That is, the fourth bent portion 14 may extend along a semi-circular arc. Specifically, the fourth bent portion 14 may extend along a quarter-circular arc protruding toward a connection position between the second heat exchange portion 121 and the fourth heat exchange portion 125. An angle between an entrance and an exit of the fourth bent portion 14 is 90°. The fourth bent portion 14 is analogous to a 90° elbow in piping materials, and may change a flow channel direction, so that after the fluid passes through the fourth bent portion 14, the flow direction of the fluid is changed by 90°.

Further, the fourth bent portion 14 connects the third heat exchange section 13 to the first heat exchange portion 111. The third heat exchange section 13 and the first heat exchange portion 111 may be arranged perpendicular to each other. The first heat exchange portion 111 extends along the second direction, the third heat exchange section 13 extends along the first direction, and the first direction is perpendicular to the second direction.

The fixing member 25 may be connected to the fourth bent portion 14, or the fixing member 25 is connected to the portion of the first heat exchange portion 111 close to the fourth bent portion 14. In this way, the region in which the fourth bent portion 14 is located can be restricted and limited to reduce the probability that the position of the fourth bent portion 14 is separated from the case body 200 or has inadequate adhesive compression, so that the stability when the heat exchange fluid flows through the fourth bent portion 14 is improved, which is conducive to improving the operational reliability of the first heat exchange member 100, thereby improving the reliability of the battery 1.

For example, referring to the foregoing description, a second fixing member 252 can fix both a region around a fifth bent portion 128 and a region around the fourth bent portion 14.

In the foregoing technical solution, the third heat exchange section 13 is disposed, so that the heat exchange area of the first heat exchange flow channel 10 can be further increased, thereby further improving the heat exchange effect of the first heat exchange flow channel 10. The fourth bent portion 14 is disposed to enable the flow direction of the fluid to change from an original flow direction to a direction perpendicular to the original flow direction after the fluid passes through the fourth bent portion 14. In addition, the arc shape can further reduce the flow resistance of the fluid, so that the fluid can smoothly flow in the fourth bent portion 14, thereby effectively preventing excessively slow flow of the fluid that consequently degrades heat exchange efficiency. The fourth bent portion 14 or the portion of the first heat exchange portion 111 close to the fourth bent portion 14 is connected by the disposed fixing member 25, so that the probability of adhesive failure or inadequate adhesive compression between the position of the fourth bent portion 14 and the case body 200 can be reduced, thereby improving the heat exchange reliability between the heat exchange fluid and the battery cell 102 when the heat exchange fluid flows through the fourth bent portion 14, so that the reliability of the battery 1 can be improved.

In some embodiments of the present application, referring to FIG. 3 and FIG. 5, a plurality of fixing members 25 are provided and are disposed at least on two sides of the first heat exchange section 11 in the second direction Y. Each fixing member 25 extends along the first direction X. One of the plurality of fixing members 25 that is close to the third heat exchange portion 122 is a first fixing member 251. Another one of the plurality of fixing members 25 that is close to the third heat exchange section 13 is a second fixing member 252. The first fixing member 251 is connected to or disposed close to the second bent portion 123 and is connected to or disposed close to the third bent portion 124. The second fixing member 252 is connected to or disposed close to the fourth bent portion 14.

A quantity of the fixing members 25 may be, but is not limited to, 2, 3, 4, 5, and the like. For example, two fixing members 25 may be provided, and the two fixing members 25 are disposed on two sides of the first heat exchange section 11 in the second direction Y. Three or more fixing members 25 may alternatively be provided. Two of the fixing members 25 are disposed on two sides of the first heat exchange section 11 in the second direction Y, and one or more fixing members 25 may be disposed at a middle position of the first heat exchange section 11. In this way, the plurality of fixing members 25 are disposed, so that the fixing positions of the first heat exchange section 11 to the case body 200 can be increased, thereby improving the connection reliability between the first heat exchange section 11 and the case body 200, and reducing the probability that the first heat exchange section 11 is separated from the case body 200 or has inadequate adhesive compression, which is conducive to improving the heat exchange reliability of the battery 1.

Each fixing member 25 extends along the first direction X. That is, each fixing member 25 has an elongated shape. Each fixing member 25 can provide more fixing positions, and can fix a plurality of positions of the first heat exchange section 11 (referring to the foregoing, the first heat exchange section 11 includes a plurality of first heat exchange portions 111, and each fixing member 25 can be fixedly connected to the plurality of first heat exchange portions 111). In this way, a quantity of fixing members 25 can be reduced, which is conducive to reducing assembly steps, thereby improving assembly efficiency.

In the foregoing technical solution, in the plurality of fixing members 25, the first fixing member 251 can be connected to or disposed close to the second bent portion 123 and connected to or disposed close to the third bent portion 124. The second fixing member 252 is connected to or disposed close to the fourth bent portion 14. That is, the second bent portion 123 and the third bent portion 124 are located at one end of the first heat exchange section 11 in the second direction Y, and the fourth bent portion 14 is located at the other end of the first heat exchange section 11 in the second direction Y. Therefore, the first fixing member 251 and the second fixing member 252 are disposed, so that the bent portions of the first heat exchange section 11 that are located at two ends of the second direction Y can be respectively fixed, so that the bent portions of the first heat exchange member 100 can be better fixed to the case body 200, thereby further improving the connection reliability between the first heat exchange member 100 and the case body 200.

In some embodiments of the present application, referring to FIG. 3 and FIG. 5, the first heat exchange flow channel 10 further includes a first access section 15. One end of the first access section 15 is connected to the third heat exchange section 13 at an angle, and the other end of the first access section 15 is formed as a first access port of the heat exchange flow channel. The first access section 15 extends along the second direction Y away from the first heat exchange section 11. The third heat exchange section 13 is disposed extending along the first direction X.

The first access port is configured for the inflow or outflow of the heat exchange fluid. When the first access port is configured for inflow of the heat exchange fluid, the first access section 15 is configured to transfer the heat exchange fluid to the third heat exchange section 13. When the first access port is configured for outflow of the heat exchange fluid, the first access section 15 is configured to guide out the heat exchange fluid after heat exchange to the first heat exchange flow channel 10 through the first access port.

The first access section 15 is connected to the third heat exchange section 13 at an angle. For example, the first access section 15 is connected to the third heat exchange section 13 and is arranged at an angle greater than 0° and less than or equal to 180°. For example, an angle between the first access section 15 and the third heat exchange section 13 is 30°, 45°, 60°, 90°, 120°, 135°, 150°, or the like.

It may be understood that an angle is formed between the first access section 15 and the third heat exchange section 13. Therefore, a side of the third heat exchange section 13 that faces the first access section 15 may form a particular space. In this way, the layout of other components in the battery 1 can be facilitated.

In the foregoing technical solution, the first access section 15 is disposed, so that it is convenient to connect to an external tube, allowing a heat exchange medium to enter or exit the first heat exchange flow channel 10. In addition, the function of guiding the heat exchange fluid entering or exiting the first heat exchange flow channel 10 can also be implemented to allow the heat exchange fluid to rapidly enter or exit, thereby improving the heat exchange rate. The first access section 15 is disposed extending along the second direction away from the first heat exchange section 11, so that the arrangement of tubes of the first heat exchange flow channel 10 is more appropriate, and it is convenient to connect to an external tube. In addition, the first access port may be further away from a battery assembly including a plurality of rows of battery cells 102, which is conducive to reducing occurrence of damage caused to the battery assembly due to water leakage from the first access port.

In some embodiments of the present application, referring to FIG. 3 and FIG. 5, the second heat exchange portion 121 extends along the second direction Y. The second heat exchange section 12 further includes a sixth bent portion 11. The sixth bent portion 11 is arc-shaped and is connected between one end of the fourth heat exchange portion 125 and an end of the second heat exchange portion 121 away from the third heat exchange portion 122, and the other end of the fourth heat exchange portion 125 extends along the first direction X away from the second heat exchange portion 121. The first direction X and the second direction Y are disposed at an angle. The fixing member 25 is connected to the sixth bent portion 11 or a portion of the second heat exchange portion 121 close to the sixth bent portion 11.

The sixth bent portion 11 is formed to be arc-shaped, that is, the sixth bent portion 11 extends along an arc, and an angle exists between flow directions of the fluid at the two ends of the sixth bent portion 11. Therefore, the sixth bent portion 11 may change the flow direction of the heat exchange fluid, so that the second heat exchange portion 121 and the fourth heat exchange portion 125 can extend along the preset direction. In addition, the sixth bent portion 11 of the arc shape may reduce the flow resistance of the fluid and reduce a pressure drop, thereby improving the flow rate of the heat exchange fluid, and further improving the heat exchange efficiency of the first heat exchange flow channel 10.

In the foregoing technical solution, the sixth bent portion 11 is disposed, so that the flow direction of the fluid inside the first heat exchange flow channel 10 can be changed, and the serpentine arrangement of the first heat exchange flow channel 10 is implemented. Therefore, a heat exchange area of the first heat exchange flow channel 10 can be increased, thereby improving heat exchange efficiency of the first heat exchange flow channel 10. In addition, the arc shape of the sixth bent portion 11 can further reduce the flow resistance of the fluid and reduce a pressure drop, thereby improving the flow rate of the heat exchange fluid, and further improving heat exchange efficiency of the first heat exchange flow channel 10.

According to some embodiments of the present application, referring to FIG. 3 and FIG. 5, the sixth bent portion 126 is a quarter-circular arc.

That is, the sixth bent portion 126 may extend along a semi-circular arc. Specifically, the sixth bent portion 126 may extend along a quarter-circular arc protruding away from the first heat exchange section 11. An angle between an entrance and an exit of the sixth bent portion 126 is 90°. The sixth bent portion 126 is analogous to a 90° elbow in piping materials, and may change a flow channel direction, so that after the fluid passes through the sixth bent portion 126, the flow direction of the fluid is changed by 90°.

Further, the sixth bent portion 126 connects the second heat exchange portion 121 to the fourth heat exchange portion 125. In this case, the second heat exchange portion 121 and the fourth heat exchange portion 125 are arranged perpendicular to each other.

The fixing member 25 may be connected to the sixth bent portion 126, or the fixing member 25 is connected to the portion of the second heat exchange portion 121 close to the sixth bent portion 126. In this way, the fixing member 25 can restrict and limit the region in which the sixth bent portion 126 is located to reduce the probability that the position of the sixth bent portion 126 is separated from the case body 200 or has inadequate adhesive compression, so that the stability when the heat exchange fluid flows through the sixth bent portion 126 is improved, which is conducive to improving the operational reliability of the first heat exchange member 100, thereby improving the reliability of the battery 1.

In the foregoing embodiment, the sixth bent portion 126 is configured to be a quarter-circular arc to enable the flow direction of the fluid to change from an original flow direction to a direction perpendicular to the original flow direction after the fluid passes through the sixth bent portion 126. In addition, the arc shape can further reduce the flow resistance of the fluid, so that the fluid can smoothly flow in the sixth bent portion 126, thereby effectively preventing excessively slow flow of the fluid that consequently degrades heat exchange efficiency. The sixth bent portion 126 or the portion of the second heat exchange portion 121 close to the sixth bent portion 126 is connected by the disposed fixing member 25, so that the probability of adhesive failure or inadequate adhesive compression between the position of the sixth bent portion 126 and the case body 200 can be reduced, thereby improving the heat exchange reliability between the heat exchange fluid and the battery cell 102 when the heat exchange fluid flows through the sixth bent portion 126, so that the reliability of the battery 1 can be improved.

Optionally, the sixth bent portion 126 may be a semi-circular arc. That is, the sixth bent portion 126 may extend along a semi-circular arc, an angle between an entrance and an exit of the sixth bent portion 126 is 180°, and flow directions at the entrance and the exit of the sixth bent portion 126 are opposite. In this way, the fourth heat exchange portion 125 is closer to the second heat exchange portion 121, and the structure of the fourth heat exchange portion 125 and the second heat exchange portion 121 is more compact and reliable. In another embodiment, a bending degree of the sixth bent portion 126 may alternatively be adjusted as required, and may be, for example, 150°, 135°, or the like. This is not limited in the embodiments of the present application.

In some embodiments of the present application, referring to FIG. 3 and FIG. 5, the first heat exchange flow channel 10 further includes a second access section 17, one end of the second access section 17 is connected to the fourth heat exchange portion 125 at an angle, and the other end of the second access section 17 is formed as a second access port of the heat exchange flow channel. The second access section 17 extends along the second direction Y away from the first heat exchange section 11, and the fourth heat exchange portion 125 is disposed extending along the first direction X.

The second access port is configured for the inflow or outflow of the heat exchange fluid. When the second access port is configured for inflow of the heat exchange fluid, the second access section 17 is configured to transfer the heat exchange fluid to the third heat exchange section 13. When the second access port is configured for outflow of the heat exchange fluid, the second access section 17 is configured to guide out the heat exchange fluid after heat exchange to the first heat exchange flow channel 10 through the second access port.

The second access section 17 is connected to the fourth heat exchange portion 125 at an angle. For example, the second access section 17 is connected to the fourth heat exchange portion 125 and is arranged at an angle greater than 0° and less than or equal to 180°. For example, an angle between the second access section 17 and the fourth heat exchange portion 125 is 30°, 45°, 60°, 90°, 120°, 135°, 150°, or the like.

It may be understood that an angle is formed between the second access section 17 and the fourth heat exchange portion 125. Therefore, a side of the fourth heat exchange portion 125 that faces the second access section 17 may form a particular space. In this way, the layout of other components (structures such as a high-voltage distribution box) in the battery 1 can be facilitated.

In the foregoing embodiment, the second access section 17 is disposed, so that it is convenient to connect to an external tube, allowing a heat exchange medium to enter or exit the first heat exchange flow channel 10 to complete heat exchange on the battery cell 102. In addition, the function of guiding the heat exchange fluid entering or exiting the first heat exchange flow channel 10 can also be implemented to allow the heat exchange fluid to rapidly enter or exit, thereby improving the heat exchange rate. The second access section 17 is disposed extending along the second direction away from the first heat exchange section 11, so that the arrangement of tubes of the first heat exchange flow channel 10 is more appropriate, and it is convenient to connect to an external tube. In addition, the second access port may be further away from the battery assembly, which is conducive to reducing occurrence of damage caused to the battery assembly due to water leakage from the second access port.

According to some embodiments of the present application, referring to FIG. 3 and FIG. 5, the first heat exchange flow channel 10 further includes a seventh bent portion 18. The seventh bent portion 18 is arc-shaped, and is bent and connected between the fourth heat exchange portion 125 and the second access section 17.

The seventh bent portion 18 is arc-shaped. That is, the seventh bent portion 18 has a particular angle. Therefore, the seventh bent portion 18 is bent and connected between the fourth heat exchange portion 125 and the second access section 17 to implement communication between the fourth heat exchange portion 125 and the second access section 17, so that the heat exchange fluid can smoothly circulate from the fourth heat exchange portion 125 to the second access section 17 or circulate from the second access section 17 to the fourth heat exchange portion 125, to implement liquid inflow or outflow of the second access section 17. In addition, the arc shape may further reduce the flow resistance of the fluid and reduce a pressure drop, so that the flow rate of the heat exchange fluid can be improved, thereby further improving the heat exchange efficiency of the first heat exchange flow channel 10.

In the foregoing embodiment, the seventh bent portion is provided, so that the heat exchange fluid can smoothly circulate from the fourth heat exchange portion 125 to the second access section 17 or circulate from the second access section 17 to the fourth heat exchange portion 125, thereby implementing liquid inflow or outflow in the second access section 17. In addition, the seventh bent portion 18 being arc-shaped can further reduce the flow resistance of the fluid and reduce a pressure drop, so that the flow rate of the heat exchange fluid can be improved, thereby further improving the heat exchange efficiency of the first heat exchange flow channel 10.

According to some embodiments of the present application, referring to FIG. 3 and FIG. 5, the seventh bent portion 18 has a circular arc shape, and the central angle corresponding to the seventh bent portion 18 is greater than or equal to 90° and less than 180°.

For example, the central angle corresponding to the seventh bent portion 18 may be 90°, 120°, 150°, or 170°.

In the foregoing embodiment, the seventh bent portion 18 is configured to have an arc shape, so that the flow resistance of the fluid can be further reduced, allowing the fluid to smoothly flow in the seventh bent portion 18, thereby effectively preventing excessively slow flow of the fluid that degrades the heat exchange efficiency. In addition, the central angle corresponding to the seventh bent portion 18 is greater than or equal to 90° and less than 180°. An avoidance space may be further formed on a side of the fourth heat exchange portion 125 facing the second access section 17, which can be conducive to the layout of other components in the battery 1, thereby improving the layout appropriateness of the battery 1.

Optionally, the seventh bent portion 18 may be a semi-circular arc. That is, the seventh bent portion 18 may extend along a semi-circular arc, an angle between an entrance and an exit of the seventh bent portion 18 is 180°, and flow directions at the entrance and the exit of the seventh bent portion 18 are opposite. In this way, the fourth heat exchange portion 125 is closer to the second access section 17, and the structure of the fourth heat exchange portion 125 and the second access section 17 is more compact and reliable. In another embodiment, a bending degree of the seventh bent portion 18 may alternatively be adjusted as required, and may be, for example, 150°, 135°, or the like. This is not limited in the embodiments of the present application.

In some embodiments of the present application, referring to FIG. 3 and FIG. 5, a plurality of first heat exchange members 100 are provided and are disposed at intervals in the first direction X, and the first direction X and the second direction Y are disposed at an angle. The fixing member 25 is connected to the at least one adjacent first bent portion 112 or the portion of the first heat exchange portion 111 close to the first bent portion 112 in the plurality of first heat exchange members 100.

It may be understood that "the second direction and the first direction are disposed at an angle" is intended to describe that the first direction and the second direction may be arranged vertically, or may be arranged only to intersect with each other in a non-vertical configuration. For example, the first direction and the second direction may be arranged at an angle of 30°, 60°, or 80°. A quantity of the first heat exchange members 100 may be, but is not limited to, 2, 3, 4, and the like. For example, referring to FIG. 5, two first heat exchange members 100 are provided, and are spaced apart in the first direction X.

The fixing member 25 is connected to at least one adjacent first bent portion 112 or the portion of the first heat exchange portion 111 close to the first bent portion 112 in the plurality of first heat exchange members 100. It may be understood that each first heat exchange member 100 may have a plurality of bent portions. The fixing member 25 can be connected to one or more first bent portions 112 in each first heat exchange member 100, or the fixing member 25 can be connected to the portion of the first heat exchange portion 111 close to the first bent portion 112 in each first heat exchange member 100. In this way, the adaptability of the fixing member 25 to the plurality of first heat exchange members 100 can be improved, which is conducive to fixing edge positions of the plurality of first heat exchange members 100 on the case body 200 together.

In the foregoing technical solution, a plurality of first heat exchange members 100 are disposed at intervals in the first direction X, and the first direction X and the second direction Y are disposed at an angle. In this way, the diversity of the first heat exchange members 100 can be enhanced, to improve the adaptability of the first heat exchange members 100, so that the first heat exchange members 100 can meet different requirements of the battery 1, thereby improving the market competitiveness of the battery 1. In addition, the plurality of first heat exchange members 100 are arranged in parallel, so that the plurality of first heat exchange members 100 can exchange heat at the same time, thereby reducing the heat exchange time of individual first heat exchange members 100, and improving heat exchange efficiency. The at least one adjacent first bent portion 112 or the portion of the first heat exchange portion 111 close to the first bent portion 112 in the plurality of first heat exchange members 100 is connected by the fixing member 25. Therefore, the fixing member 25 can simultaneously fix the plurality of first heat exchange members 100 to the case body 200, so that a quantity of fixing members 25 can be reduced, and assembly steps can be reduced, thereby improving assembly efficiency.

In some embodiments of the present application, the first heat exchange member 100 includes at least one heat exchange tube, when a plurality of heat exchange tubes are provided, the plurality of heat exchange tubes are disposed at intervals and are in successive communication, and an inner wall of each heat exchange tube defines the first heat exchange flow channel 10.

For example, one, two, three, or more heat exchange tubes may be provided, and the quantity of the heat exchange tubes may be designed based on the size of the battery 1. Specifically, the heat exchange flow channel is defined inside the heat exchange tube, and is configured to circulate the heat exchange fluid. The heat exchange tube may have various shapes, for example, may be a circular tube, a flat tube, or the like. In addition, the heat exchange flow channel defined by the heat exchange tube may also have various shapes, for example, a U-shaped heat exchange flow channel, or a serpentine heat exchange flow channel.

Further, the plurality of heat exchange tubes are arranged in parallel. For example, inlet ends of the plurality of heat exchange tubes are connected to a distribution chamber of a manifold, and outlet ends of the plurality of heat exchange tubes are all connected to a collection chamber of the manifold.

The plurality of heat exchange tubes may be sequentially arranged along the first direction. For example, the plurality of heat exchange tubes may be arranged at intervals in the first direction X. Certainly, the plurality of heat exchange tubes may be arranged around each other. Further, the plurality of heat exchange tubes are arranged around each other in the same plane.

In the foregoing embodiment, the first heat exchange member 100 is configured to include at least one heat exchange tube, so that the process complexity of the first heat exchange member 100 can be reduced, thereby improving the production rate of the first heat exchange member 100, and a pressure drop of the fluid inside a single heat exchange tube can be reduced, thereby improving heat exchange efficiency. In addition, a tube-like structure is simpler than a plate-like structure, has low costs, and is convenient to process.

According to some embodiments of the present application, the heat exchange tube may be formed by bending a single tube.

The "formed by bending a single tube" means that the heat exchange tube may be formed by bending a single straight tube a plurality of times through pressing or another processing process. For example, a single straight tube may be bent at a plurality of preset positions, to produce a V shape, a U shape, or the like at a bent position. The bent shape of the single tube may be designed according to actual requirements.

In the foregoing embodiment, the heat exchange tube is configured to be formed by bending a single tube, a quantity of welding points of the first heat exchange member 100 can be reduced, thereby reducing the risk of leakage of the first heat exchange member 100, and improving the use reliability of the first heat exchange member 100. In addition, compared with a manufacturing process of a plate-like structure, an operation process of formation by bending a single tube is relatively simple, thereby significantly reducing the costs of the first heat exchange member 100.

According to some embodiments of the present application, the heat exchange tube is bent in an arc shape at a bending position.

The arc-shaped bending can reduce the flow resistance of the fluid and reduce a pressure drop. Further, the heat exchange tube is bent in arc shape at a bending position, so that the flow rate of the heat exchange fluid in the heat exchange flow channel can be increased, thereby improving the heat exchange efficiency of the first heat exchange member 100.

In the foregoing embodiment, the heat exchange tube is configured to be bent at a bending position in an arc shape to reduce the flow resistance of the fluid and reduce a pressure drop, so that the flow rate of the heat exchange fluid in the heat exchange flow channel can be increased, thereby improving the heat exchange efficiency of the first heat exchange member 100.

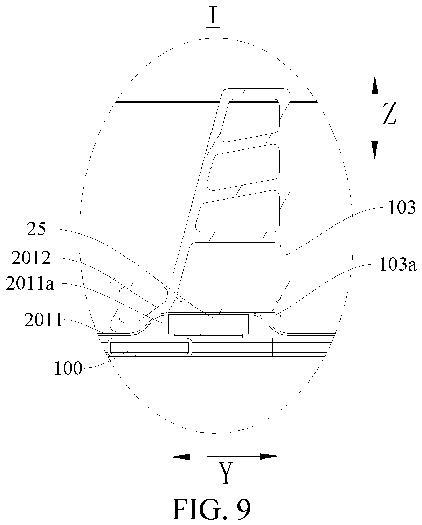

In some embodiments of the present application, referring to FIG. 6 and FIG. 9, the case body 200 is provided with a plurality of case walls, at least one of the plurality of case walls is a first case wall 2011, the first case wall 2011 is provided with a first groove 2011a, and the fixing member 25 is at least partially located in the first groove 2011a.

The case walls may be wall bodies that define an inner space of the case body 200, and may be understood as a flat-plate structure that defines the inner space of the case body 200. The case walls may be formed from materials, including, but not limited to, wood, plastic, and metal. Because the shape of the case body 200 varies, the quantity of case walls defining the inner space also varies. For example, when the shape of the case body 200 is a cuboid, the case body 200 has six case walls, and one or more of the six case walls may be the first case wall 2011.

The first groove 2011a may be a notch or recess that is formed in the first case wall 2011 and that may be used for accommodating or fixing a component. The shape of the first groove 2011a may include, but is not limited to, a square shape, an elongated shape, a circular shape, a racing track shape, and the like, and may be adjusted based on the shape of the fixing member 25, to match the shape of the fixing member 25.

The first groove 2011a may be formed in the first case wall 2011 in various manners. For example, when the first case wall 2011 has a large thickness, the first groove 2011a may be a groove dug in the first case wall 2011. When the first case wall 2011 is a sheet metal member with a small thickness, the first groove 2011a may be a groove formed by recessing the first case wall 2011.

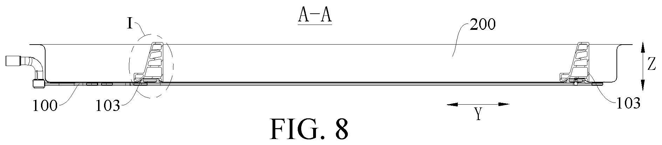

In the foregoing solution, the fixing member 25 may be partially located in the first groove 2011a. That is, the height of the fixing member 25 is greater than the depth of the first groove 2011a. Alternatively, the fixing member 25 may be completely located in the first groove 2011a. That is, the height of the fixing member 25 is less than or equal to the depth of the first groove 2011a. For example, referring to FIG. 8 and FIG. 9, the first case wall 2011 may be a bottom wall of the case body 200. Therefore, the foregoing "height of the fixing member 25" and "depth of the first groove 2011a" may be in the third direction Z in FIG. 9. That is, the fixing member 25 has a small projection dimension or does not protrude with respect to the first case wall 2011 in the third direction Z. Therefore, the structure of the assembled body formed by the case body 200, the fixing member 25, and the first heat exchange member 100 in the third direction Z is relatively compact, and has a relatively small overall dimension in the third direction Z.

In the foregoing technical solution, the fixing member 25 is at least partially disposed in the first groove 2011a, and the first groove 2011a can provide a partial space required for installing the fixing member 25. Therefore, on one hand, the structural compactness of the assembled body formed by the case body 200, the fixing member 25, and the first heat exchange member 100 can be improved, and the overall size can be made relatively small, which is conducive to saving a space, reducing the volume, and improving the volumetric energy density of the battery 1. On the other hand, the first groove 2011a can limit and restrict the fixing member 25, to improve the connection reliability between the fixing member 25 and the case body 200, thereby further improving the connection reliability between the first heat exchange member 100 and the case body 200, which is conducive to improving the reliability of the battery 1 and prolonging the service life of the battery 1.

In some embodiments of the present application, referring to FIG. 9, a portion of the first case wall 2011 protrudes toward a side away from the first heat exchange member 100 to form a convex portion 2012, and the first groove 2011a is formed by a peripheral wall at a protrusion position of the convex portion 2012.

The convex portion 2012 may be a portion that is in the first case wall 2011 and that protrudes or is convex with respect to a surrounding region. For example, the first case wall 2011 is a sheet metal member, and the convex portion 2012 may be a convex rib formed on the first case wall 2011.

In the foregoing technical solution, the convex portion 2012 protrudes toward the inner side of the case body 200, and the first groove 2011a is formed in the peripheral wall of the protrusion position. Therefore, on the premise that the first groove 2011a is formed in the first case wall 2011 and can be used for accommodating the fixing member 25, the remaining portion of the first case wall 2011 other than the convex portion 2012 can be configured to have a relatively small thickness, which is conducive to reducing the thickness of the first case wall 2011 and reducing the weight of the first case wall 2011, thereby improving the energy density of the battery 1. In addition, the first groove 2011a is formed in the peripheral wall of the convex portion 2012, which is also conducive to improving the strength at a position of the first groove 2011a, reducing insufficient structural strength of the first case wall 2011 due to the arrangement of the first groove 2011a, so that the reliability of the first case wall 2011 can be improved, thereby improving the reliability of the case body 200, and improving the overall reliability of the battery 1.

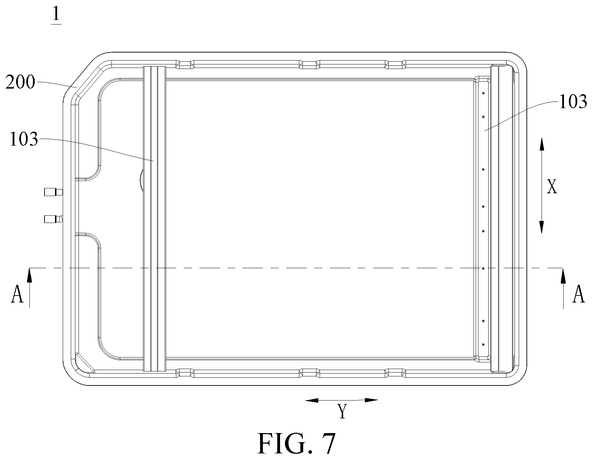

In some embodiments of the present application, referring to FIG. 7, FIG. 8, and FIG. 9, the convex portion 2012 protrudes toward an inner side of the case body 200, the battery 1 further includes a beam structure 103, the beam structure 103 is disposed in the case body 200, the beam structure 103 is provided with a second groove 103a, and the convex portion 2012 is at least partially located in the second groove 103a.

The beam structure 103 may be a beam that is arranged on an inner side of the case body 200 and that performs a strengthening function, or may be a beam (for example, an expansion beam) that performs a buffering function on the expansion of the battery cell 102. The beam structure 103 may be, but is not limited to, a solid beam or a hollow beam. The shape of the beam structure 103 may be, but is not limited to, a cube, a cylinder, or the like.

The second groove 103a may be a notch or recess that is provided in the beam structure 103 and that is used for accommodating or fixing a component.

In the foregoing technical solution, the second groove 103a is provided in the beam structure 103 to accommodate the convex portion 2012, so that the beam structure 103 and the convex portion 2012 can be combined together, and the probability that the convex portion 2012 occupies a space required by the battery cell 102 in the case body 200 is reduced, which is conducive to improving the compactness of the internal structure of the battery 1, thereby improving the volumetric energy density of the battery 1. In addition, the convex portion 2012 and the second groove 103a cooperate to limit the position of the beam structure 103, thereby improving the connection reliability between the beam structure 103 and the case body 200, and further improving the reliability of the battery 1.

In some embodiments of the present application, referring to FIG. 3 and FIG. 7, the beam structure 103 and the fixing member 25 extend along the first direction X, and the second groove 103a and the convex portion 2012 extend along the first direction X.

In the foregoing technical solution, the beam structure 103, the fixing member 25, the second groove 103a, and the convex portion 2012 all have an elongated shape. When the second groove 103a and the convex portion 2012 have an elongated shape, the strength of the beam structure 103 can be improved, and the tensile and flexural strength of the beam structure 103 in the first direction X can be improved, thereby improving the overall strength of the beam structure 103. The fixing member 25 has an elongated shape. On one hand, the fixing member 25 can work together with the convex portion 2012 to further improve the structural strength of the beam structure 103, and on the other hand, the fixing member 25 can increase more fixing positions and a larger fixing surface, so that the fixing effect on the first heat exchange member 100 can be enhanced, and a quantity of fixing members 25 can be reduced while a better fixing effect is achieved on the first heat exchange member 100, thereby improving assembly efficiency.

In some embodiments of the present application, referring to FIG. 3 and FIG. 7, the beam structure 103 is an expansion beam, the expansion beam is expandable and retractable in the second direction Y, and the second direction Y is parallel to the first case wall 2011 and is perpendicular to the first direction X.

The expansion beam may be a component used for relieving volume expansion or contraction caused by charging or discharging or a temperature change inside the battery 1. The expansion beam is usually made of a flexible material, for example, an elastic rubber or a polymer.

During the use of the battery 1, the expansion beam may deform or bend to absorb a volume change caused by a chemical reaction inside the battery, thereby preventing or reducing the deformation of the battery cell 102, and reducing the risk of stress concentration and damage of the battery cell 102. The expansion beam can further function to protect a positive electrode, a negative electrode, and other components of the battery cell 102, and reduce the probability that the positive electrode, the negative electrode, and the other components are damaged or fractured in a charging and discharging process of the battery 1. It can be seen that the expansion beam is conducive to maintaining the electrochemical performance and the cycle life of the battery 1 by reducing stress concentration and structural instability, and is one of the relatively important components of the battery 1.

In the foregoing technical solution, because the fixing member 25 extends along the first direction X and the second groove 103a and the convex portion 2012 extend along the first direction X, the fixing member 25 and the convex portion 2012 can improve the structural strength of the expansion beam, and improve the tensile and flexural strength of the expansion beam in the first direction X, that is, the reliability of the expansion beam can be improved, which is conducive to reducing the probability of stress concentration and structural instability of the battery cell 102, thereby further improving the overall reliability of the battery 1.

In some embodiments of the present application, referring to FIG. 9, the beam structure 103 is a hollow beam, and a portion of the beam structure 103 protrudes toward an inner side of the hollow beam to form the second groove 103a.

The hollow beam may be a beam structure in which a central portion of a cross section is empty, and is usually formed by hollowing out the central portion of the cross section of a beam. The shape of the hollowing out may include, but is not limited to, a circle, a rectangle, a triangle, a trapezoid, and the like.

In the foregoing technical solution, the beam structure 103 is disposed as a hollow beam, and after the portion of the beam structure 103 protrudes toward the inner side of the hollow beam to form the second groove 103a, the strength of the beam structure 103 can be further improved, thereby improving the reliability of the beam structure 103. In addition, the beam structure 103 is a hollow beam, and the second groove 103a may be formed in a manner of protruding toward the inside, which is conducive to reducing the difficulty in forming the second groove 103a and improving the manufacturability of the second groove 103a, thereby reducing manufacturing costs. When the beam structure 103 is a hollow beam, the weight of the beam structure 103 can be further reduced, thereby reducing the overall weight of the battery 1 and improving the energy density of the battery 1. In addition, the beam structure 103 is a hollow beam having high strength and stiffness, so that better support can be achieved, and the usage of materials can be reduced, thereby further reducing manufacturing costs.

In some embodiments of the present application, the convex portion 2012 and the second groove 103a are bonded.

The convex portion 2012 and the second groove 103a being bonded may mean that a glue, a double-sided adhesive, or a hot-metal adhesive (but not limited thereto) may be used between the convex portion 2012 and the second groove 103a.

In the foregoing technical solution, the convex portion 2012 and the second groove 103a are bonded, so that the convex portion 2012 and the second groove 103a can be more tightly and securely combined, and the connection reliability between the beam structure 103 and the case body 200 can be improved, and the effect of increasing the strength of the convex portion 2012 on the beam structure 103 can be further improved, so that the beam structure 103 has higher strength.

In some embodiments of the present application, the beam structure 103 is a non-metal beam structure 103. In the technical solution, the strength of the beam structure 103 can be improved after the convex portion 2012 and the second groove 103a cooperate, so that a requirement of the beam structure 103 for force-bearing strength can be reduced. The beam structure 103 is disposed as a non-metal beam structure, so that the weight of the beam structure 103 can be reduced, the electrical safety can be improved, and a thermal insulation effect can be improved.

In some embodiments of the present application, referring to FIG. 3, FIG. 6, and FIG. 9, the first case wall 2011 is a bottom wall of the case body 200, and the first heat exchange member 100 is located on an outer side of the case body 200.

In the foregoing technical solution, the first case wall 2011 is the bottom wall and may have a large surface, so that the first heat exchange member 100 disposed on the bottom wall can have a larger heat surface area, thereby improving the heat exchange effect of the first heat exchange member 100 on the battery cell 102, and improving the heat exchange efficiency. The first heat exchange member 100 is located on the outer side of the case body 200, so that the probability that a cooling medium in the first heat exchange member 100 leaks to the case body 200 to cause a safety risk can be reduced, thereby improving the reliability of the battery 1.

In some embodiments of the present application, referring to FIG. 4, the case body 200 includes a case shell 22 and a bottom panel 23, a bottom of the case shell 22 is provided with a first opening 22a, the bottom panel 23 is connected to the bottom of the case shell 22 to close the first opening 22a, the first heat exchange member 100 is fitted on a side of the bottom panel 23 away from the case shell 22, and the fixing member 25 is disposed on the bottom panel 23.

The case shell 22 may be a main portion of the case body 200, and may be a frame structure with two ends or one end being open. The case shell 22 may include, but is not limited to, a frame structure and a shell structure formed by a plurality of panels.

The bottom panel 23 may be a panel disposed at a bottom of the case body 200, and is configured to close the first opening 22a at the bottom of the case shell 22.

In the foregoing technical solution, the bottom panel 23 is generally a plate having the largest area of the case body 200, and the first heat exchange member 100 is fitted on the side of the bottom panel 23 away from the case shell 22. Therefore, a larger heat exchange surface can be provided with the battery cell 102 in the case body 200, thereby improving a heat exchange effect, and improving heat exchange efficiency. The fixing member 25 is disposed on the bottom panel 23, and the fixing member 25 can fix the first heat exchange member 100 on the outer side of the case body 200, thereby reducing the probability that the fixing member 25 occupies a space inside the case body 200, and reducing the impact of the fixing member 25 on the space required by the battery cell 102.

In some embodiments of the present application, referring to FIG. 4, a second opening 22b is provided at the top of the case shell 22, and the case body 200 further includes a top panel 24. The top panel 24 is connected to the case shell 22 and is configured to close the second opening 22b of the case shell 22.

The top panel 24 may be a panel disposed at a top of the case body 200 and is configured to close the opening at the top of the case shell 22.

In the foregoing technical solution, the top panel 24 may close the second opening 22b of the case shell 22 to facilitate the installation or removal of the battery cell 102.

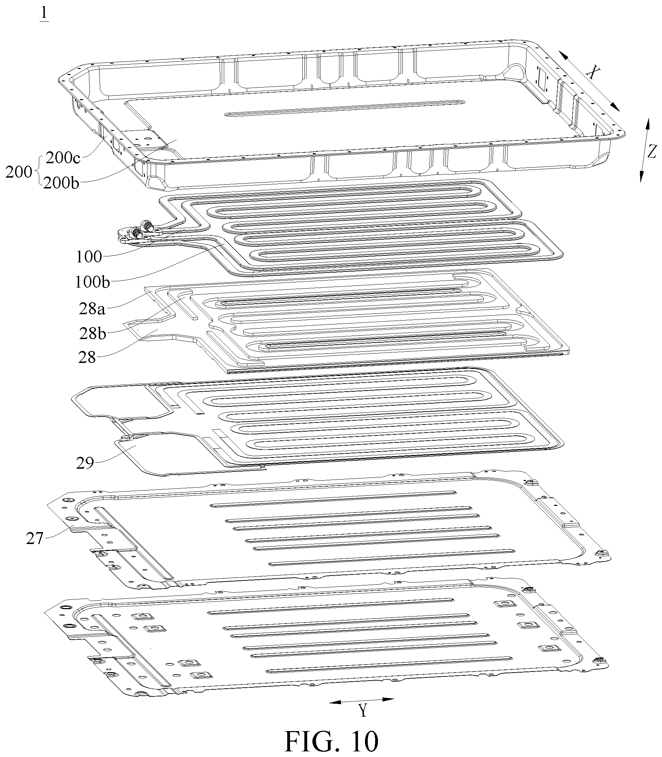

In some embodiments of the present application, referring to FIG. 4 and FIG. 10, the battery 1 further includes a protective plate 27. The protective plate 27 is disposed on a side of the first heat exchange member 100 away from the case body 200. The protective plate 27 is connected to the case body 200 and forms a third cavity 200a with the case body 200, and the first heat exchange member 100 is located in the third cavity 200a.

The protective plate 27 may be a plate member protecting the first heat exchange member 100. When the case body 200 undergoes an impact, the protective plate 27 can bear the impact to reduce damage caused by the impact to the first heat exchange member 100, thereby improving the reliability of the first heat exchange member 100. For example, when the power consuming apparatus is a vehicle 1000, the battery 1 is arranged at the bottom of the entire vehicle. During the running of the vehicle, the battery 1 is easily susceptible to impact from stones or other objects. Because the first heat exchange member 100 is arranged on the outer side of the case body 200, the protective plate 27 can bear the impact by stones or other objects to reduce the probability of damage to the first heat exchange member 100, thereby effectively protecting the first heat exchange member 100.

Optionally, the protective plate 27 may be, but is not limited to, a metal member or a plastic member. For example, the protective plate 27 may be a steel plate or an aluminum plate.

An arrangement position of the protective plate 27 on the case body 200 corresponds to that of the first heat exchange member 100. Referring to the foregoing description, the case body 200 may include a case shell 22 and a bottom panel 23. When the first heat exchange member 100 is fitted on an outer side of the case shell 22, the protective plate 27 is disposed at a side portion of the case body 200. When the first heat exchange member 200 is fitted on the outer side of the bottom panel 23, the protective plate 27 is disposed at the bottom of the case body 200 (referring to FIG. 4).

The third cavity 200a may refer to a closed space defined jointly by the protective plate 27 and the case body 200. The first heat exchange member 100 is disposed in the third cavity 200a, to alleviate external impact and contact with water, dirt, and the like in the external environment, so that the probability of damage to the first heat exchange member 100 can be reduced, thereby prolonging the service life of the first heat exchange member 100.

In the foregoing technical solution, the protective plate 27 is disposed on the side of the first heat exchange member 100 away from the case body 200 to protect the first heat exchange member 100, reduce the probability that the first heat exchange member 100 is damaged by collision with a foreign object, and reduce the probability that the first heat exchange member 100is impacted by a foreign object, thereby improving the reliability of the first heat exchange member 100, and further improving the reliability of the battery 1.

In some embodiments of the present application, referring to FIG. 4 and FIG. 10, the case body 200 further includes a filler 28, and the filler 28 fills a gap between the first heat exchange member 100 and the third cavity 200a.

The filler 28 may be a substance or a material used for filling a gap and filling a blank portion between materials. For example, the filler 28 may include, but is not limited to, a plastic material or a foamed material. Optionally, the filler 28 is a foamed object. The foamed object may be a material having a closed-cell or open-cell foam structure. The filler 28 may include, but is not limited to, polystyrene foam and polyurethane foam.

Optionally, the filler 28 may be a formed member and is integrated on a surface of a side of the case body 200 close to the first heat exchange member 100. For example, the filler 28 may be integrated on one of the case shell 22 and the bottom panel 23. In this example, the first heat exchange member 100 may be mounted on the filler 28, and then the protective plate 27 is mounted on the case body 200. The filler 28 may alternatively be integrated on a surface of a side of the protective plate 27 close to the first heat exchange member 100. In this example, the first heat exchange member 100 may be mounted on the case body 200, and then the protective plate 27 is mounted on the case body 200.

Referring to FIG. 4 and FIG. 10, the filler 28 may be provided with a mounting groove 28b, and the first heat exchange member 100 is disposed in the mounting groove 28b, thereby improving the mounting reliability of the first heat exchange member 100 and the filler 28.

Optionally, the protective plate 27 and the case body 200 may further be provided with an injection hole, the filler 28 is a foamed object, and the foam may be injected into the third cavity 200a through the injection hole to fill the gap between the first heat exchange member 100 and the third cavity 200a for formation after cooling.

In the foregoing technical solution, the filler 28 can isolate the first heat exchange member 100 from the protective plate 27, and has a buffer function when the protective plate 27 is impacted, to reduce damage to the first heat exchange member 100 when the protective plate 27 is impacted, thereby improving the reliability of the first heat exchange member 100. In addition, the filler 28 is disposed to fill the gap between the first heat exchange member 100 and the third cavity 200a, and the filler 28 can act on the first heat exchange member 100, the case body 200, and the protective plate 27, so that the mounting of the first heat exchange member 100 in the third cavity 200a is more secure, and the probability that the first heat exchange member 100 is displaced in the third cavity 200a is reduced, thereby improving the stability of the first heat exchange member 100. Next, the filler 28 can also achieve a thermal insulation function, to reduce the probability that the first heat exchange member 100 performs heat exchange with the protective plate 27 and the external environment, so that the first heat exchange member 100 can focus on heat exchange with the battery cell 102 in the accommodating cavity 21, thereby improving the heat exchange effect.

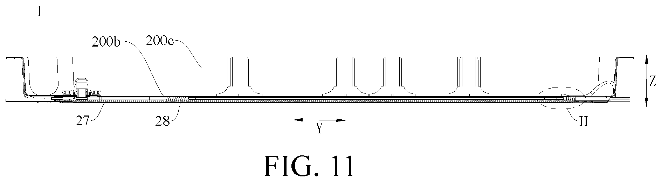

In some embodiments of the present application, referring to FIG. 10, FIG. 11, and FIG. 12, the filler 28 is a filling layer. The filling layer has a first top surface 28a on a side close to the case body 200. The first heat exchange member 100 has a second top surface 100b on a side close to the case body 200. A height of the second top surface 100b with respect to the protective plate 27 is greater than a height of the first top surface 28a relative to the protective plate 27. The case body 200 further includes a bonding member 29, and the bonding member 29 is disposed on the first top surface 28a and the second top surface 100b.

The filling layer may be a layer of a foamed material. The first top surface 28a may be a surface of the filling layer close to the case body 200. For example, when the first heat exchange member 100 and the protective plate 27 are disposed at the bottom of the case body 200, the first top surface 28a is an upper surface of the filling layer.

The second top surface 100b may be a surface of the first heat exchange member 100 close to the case body 200. For example, when the first heat exchange member 100 and the protective plate 27 are disposed at the bottom of the case body 200, the second top surface 100b is an upper surface of the first heat exchange member 100.

The bonding member 29 may be a connection member that is used to bond the filling layer and the first heat exchange member 100 to the case body 200 using an adhesive material and can achieve a sealing function. The bonding member 29 may include, but is not limited to, a glue, an adhesive tape, a bonding agent, and a structural adhesive.

In the foregoing technical solution, the second top surface 100b of the first heat exchange member 100 is disposed in a convex manner with respect to the first top surface 28a of the filling layer. Therefore, a gap between the first top surface 28a and a wall body of the case body 200 is greater than a gap between the second top surface 100b and the wall body of the case body 200, an adhesive application thickness of the filling layer is greater than an adhesive application thickness of the first heat exchange member 100, and the adhesive application thickness of the filling layer is relatively large. In this way, the connection reliability between the filling layer and the case body 200 can be improved, thereby improving the mounting reliability of the first heat exchange member 100. When small adhesive application thickness of the first heat exchange member 100 can, on one hand, improve the connection reliability between the first heat exchange member 100 and the case body 200, and on the other hand, can reduce isolation of heat exchange of the first heat exchange member 100, so that the heat exchange effect of the first heat exchange member 100 for the battery cell 102 in the case body 200 is improved, thereby improving the heat exchange efficiency of the first heat exchange member 100.

In some embodiments of the present application, referring to FIG. 10, the case body 200 is an integrally stamped member and includes a bottom wall 200b and a surrounding wall 200c.

The bottom wall 200b may be a bottom wall body of the case body 200. The surrounding wall 200c may be a peripheral annular wall body of the case body 200. The first heat exchange member 100 may be fitted on outer sides of the bottom wall 200b and/or the surrounding wall 200c.

In related technologies, a water-cooling plate of a battery is disposed at a bottom of a frame, is used for closing an opening at the bottom of the frame, and is used as the bottom wall of the case body. In the technical solution, during assembly of the cold plate and the frame, a large quantity of fastening members (for example, up to hundreds of screws) need to be used, and a sealing adhesive or a sealing pad needs to be used to perform sealing between the cold plate and the frame. This increases manufacturing costs and is also susceptible to the risk of a sealing failure. In the foregoing exemplary solution, the case body 200 being an integrally stamped member can reduce a sealing requirement. For example, a side of the case body 200 close to the first heat exchange member 100 does not need to be sealed, so that the use of sealing adhesives and sealing pads can be reduced, costs are reduced, and the probability of a sealing failure can be greatly reduced, thereby improving the safety and reliability of the case body 200.

Compared with a manner in which a cold plate and a frame form a case body structure using a fastener, the case body 200 of the present application is an integrally stamped member, and has neither a fastener like a screw nor a weld seam. The case body 200 has better integrity, which is conducive to reducing the probability that a weak strength position occurs, so that the structural strength and reliability of the case body 200 can be improved.

In the foregoing technical solution, the case body 200 is provided as an integrally stamped member, the bottom and the peripheral side of the case body 200 are closed, so that the case body has high sealing performance. After the first heat exchange member 100 is fitted on the outer side of the case body 200, a sealing requirement on the case body 200 can be reduced, which is conducive to simplifying an assembly process and reducing manufacturing costs. In addition, the case body 200 is an integrally stamped member, so that the case body 200 has relatively high structural strength, and has a relatively low probability of deformation and damage under impact, which is conducive to improving the reliability of the battery 1. Because the case body 200 is an integrally stamped member, the case body 200 has relatively high strength and has a small wall thickness, so that the weight of the case body 200 can be reduced, and the volumetric energy density per of the battery 1 can be improved.

In some embodiments of the present application, referring to FIG. 3, the first heat exchange member 100 includes a plurality of flat tubes in successive communication, and an inner wall of each flat tube defines the first heat exchange flow channel 10.

The flat tube may be a tube having a flat shape or a narrow caliber and a long length. The flat tube usually has an elliptic cross section or a rectangular cross section.

The first heat exchange flow channel 10 may be a flow channel configured to circulate a cooling medium. When the cooling medium flows through the battery cell 102 along the heat exchange flow channel, heat exchange can be performed with the battery cell 102 to adjust the temperature of the battery 1.

In the foregoing technical solution, because the case body 200 is an integrally stamped member, based on this, the first heat exchange member 100 is disposed to include the plurality of flat tubes, so that the structural arrangement of the first heat exchange member 100 and the case body 200 is more compact, and space utilization is more efficient, which is conducive to reducing the volume of the case body 200 and improving the volumetric energy density of the battery 1. Next, the flat tube further has a good pressure resistance capability, can bear a particular pressure and payload, and provides excellent tube protection and structural support, which is conducive to improving the reliability of the first heat exchange member 100.

In some embodiments of the present application, the flat tube includes one of a bent aluminum alloy tube, an aluminum alloy multi-port flat tube, an aluminum alloy stamped cold plate, and an aluminum alloy brazed cold plate.

In the foregoing technical solution, the flat tube is configured to include one of a bent aluminum alloy tube, an aluminum alloy multi-port flat tube, an aluminum alloy stamped cold plate, and an aluminum alloy brazed cold plate, so that a variety of structures can be provided for the design of the flat tube, thereby improving design flexibility, and reducing manufacturing difficulty.

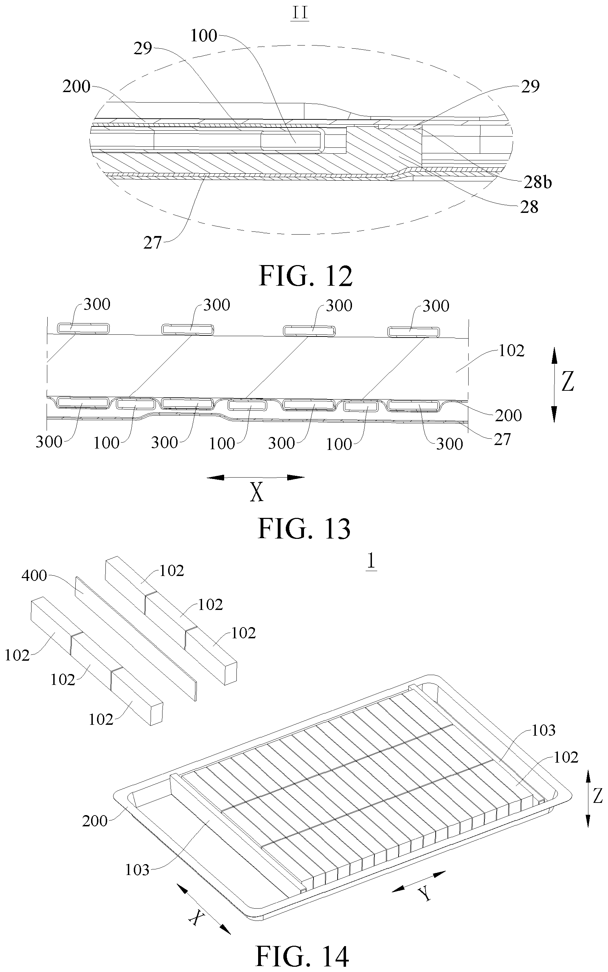

In some embodiments of the present application, referring to FIG. 13, the battery 1 further includes a second heat exchange member 300, the second heat exchange member 300 is located in the case body 200 and is fitted on at least one inner wall surface of the case body 200, and a structure of the second heat exchange member 300 is the same as or different from that of the first heat exchange member 100.

The second heat exchange member 300 may be an apparatus or a component configured to transfer heat in a heat exchange process. The second heat exchange member 300 may be generally configured to transfer heat from one medium to another medium, thereby transferring and using the heat. For example, the second heat exchange member 300 may be, but is not limited to, a heat sink, a cold plate, and the like. The second heat exchange member 300 may have a structure the same as that of the first heat exchange member 100, or may have a structure different from that of the first heat exchange member 100.

The inner wall surface of the case body 200 may be a wall surface located on an inner side of the case body 200. The case body 200 may have a plurality of inner wall surfaces. A quantity of the inner wall surfaces varies based on different shapes of the case body 200. For example, when the case body 200 is a cuboid or a cube, the case body 200 may have six inner wall surfaces, and the second heat exchange member 300 may be fitted on at least one of the top inner wall surface, the bottom inner wall surface, and the four peripheral side inner wall surfaces of the case body 200. Referring to FIG. 13, optionally, the second heat exchange member 300 may be disposed at the top and the bottom of the battery cell 102, and is fitted on a top wall inner wall surface and the bottom inner wall surface of the case body 200.

For example, the first heat exchange member 100 is fitted on an outer side surface the bottom wall of the case body 200, and the second heat exchange member 300 is fitted between four inner wall surfaces of the peripheral sides of the case body 200 and the battery cell 102. Therefore, the first heat exchange member 100 can perform heat exchange on the bottom surface of the battery cell 102, and the second heat exchange member 300 can perform heat exchange on the outermost sides of the plurality of battery cells 102, thereby improving the overall heat exchange efficiency of the battery cell 102 in the accommodating cavity 21.

In the foregoing technical solution, the case body 200 can exchange heat on one side of the internal battery cell 102 through the first heat exchange member 100, and can exchange heat on the other side of the battery cell 102 using the second heat exchange member 300. That is, the second heat exchange member 300 and the first heat exchange member 100 may cooperate with each other to exchange heat on the battery cell 102, so that heat on more side surfaces of the battery cell 102 can be exchanged, and the heat exchange surface of the battery cell 102 can be increased, which is conducive to improving heat exchange efficiency, thereby greatly improving a heat exchange effect.

In some embodiments of the present application, referring to FIG. 14, the battery 1 further includes a third heat exchange member 400, the third heat exchange member 400 is located in the case body 200 and is disposed between any two adjacent battery cells 102, and a structure of the third heat exchange member 400 is the same as or different from that of the first heat exchange member 100.

The third heat exchange member 400 may be an apparatus or a component configured to transfer heat in a heat exchange process. The third heat exchange member 400 may be generally configured to transfer heat from one medium to another medium, thereby transferring and using the heat. For example, the third heat exchange member 400 may be, but is not limited to, a heat sink, a cold plate, and the like. The third heat exchange member 400 may have a structure the same as that of the first heat exchange member 100, or may have a structure different from that of the first heat exchange member 100.

The battery cells 102 may be disposed in one or more rows in the case body 200. Referring to FIG. 14, the battery cells 102 are arranged in three rows in the second direction Y of the case body 200, and a plurality of battery cells 102 are arranged in each row in the first direction X. A third heat exchange member 400 may be provided between battery cells 102 in two adjacent rows, and the third heat exchange member 400 is fitted on the battery cells 102 in two adjacent rows, so that the third heat exchange member 400 can perform heat exchange on two adjacent battery cells 102.

Optionally, the battery 1 may include a first heat exchange member 100 and a third heat exchange member 400. The first heat exchange member 100 is fitted on an outer side of a wall body of the case body 200 facing away from the accommodating cavity 21, and the third heat exchange member 400 is arranged between two adjacent rows of battery cells 102, so that heat exchange is performed on the battery cells 102 using the two heat exchange members.

Optionally, the battery 1 may alternatively include a first heat exchange member 100, a second heat exchange member 300, and a third heat exchange member 400. The first heat exchange member 100 is fitted on an outer side of a wall body of the case body 200 facing away from the accommodating cavity 21. The second heat exchange member 300 is fitted on an inner wall surface of the case body 200. The third heat exchange member 400 is arranged between two adjacent battery cells 102. Therefore, heat exchange is performed on the battery cells 102 using the three heat exchange members.

In the foregoing technical solution, the first heat exchange member 100 may perform heat exchange on side surfaces of a plurality of battery cells 102 in the case body 200 on the same side, and the third heat exchange member 400 can perform heat exchange on other side surfaces between two adjacent battery cells 102. Therefore, the third heat exchange member 400 and the first heat exchange member 100 cooperate with each other to perform heat exchange on two surfaces of the battery cell 102, so that heat on more side surfaces of the battery cell 102 can be exchanged, and the heat exchange surface of the battery cell 102 is increased, which is conducive to improving heat exchange efficiency, thereby greatly improving a heat exchange effect.

The battery 1 provided in the embodiments of the present application includes a case body 200, a battery cell 102, a first heat exchange member 100, a fixing member 25, and an expansion beam.

The first heat exchange member 100 is a cold tube, and is fitted on the bottom surface of the case body 200 and fixed through bonding.

The fixing member 25 is a fixed bracket and is disposed corresponding to a bent portion of the cold tube. A bottom wall of the case body 200 partially protrudes toward the inner side of the case body 200, a peripheral wall of the protruding portion forms a groove, and the fixing bracket is disposed in the groove. The fixing bracket may be connected to the case body 200 in a plurality of fixing manners, including, but not limited to, soldering, gluing, riveting, and a snap connection. Correspondingly, a counterpart bracket is added to the cold tube to be fixed to the fixing bracket, thereby preventing partial sagging of the cold tube to avoid affecting a thermal management effect.

A side of the expansion beam close to the cold tube is concave inwardly to form an assembly groove, and a protruding portion of the case body 200 is disposed in the assembly groove, so that internal cavity spaces of more expansion beams can be used to fix the fixing bracket. A larger size by which the bottom wall of the case body 200 protrudes upward increases the overall strength of the case body 200, so that a requirement of the expansion beam for force-bearing strength can be reduced. The expansion beam is replaced with a non-metal structure, so that the weight of the structural member can be reduced, and the electrical safety and the thermal insulation effect can be improved.

According to a second aspect, embodiments of the present application provide a power consuming apparatus, including the foregoing battery 1.

In the foregoing technical solution, because the connection reliability between the first heat exchange member 100 and the case body 200 in the battery 1 is relatively high, and the probability that the first heat exchange member 100 and the case body 200 separate from each other is relatively low, the battery 1 has high heat exchange stability, so that the electrical reliability of the power consuming apparatus can be improved.

It should be noted that the embodiments in the present application and the features in the embodiments may be combined with each other without causing any conflict.

The foregoing descriptions are merely preferred embodiments of the present application, but are not intended to limit the present application. Persons skilled in the art may make various modifications and changes to the present application. Any modification, equivalent replacement, or improvement made without departing from the spirit and principle of the present application shall fall within the scope of protection of the present application.

## Claims

1. A battery, comprising:
a case body;
a battery cell, disposed in the case body;
a first heat exchange member, fitted outside the case body; and
a fixing member, disposed on the case body, wherein the fixing member is disposed close to at least one edge of the first heat exchange member and fixedly connects the first heat exchange member to the case body.

2. The battery according to claim 1, wherein the first heat exchange member comprises a first heat exchange flow channel , and the first heat exchange flow channel comprises a first heat exchange section and a second heat exchange section; and a U-shaped region is formed by bending the second heat exchange section, and the first heat exchange section is bent and disposed in the U-shaped region and is connected to the second heat exchange section in a bent configuration; and
the fixing member is connected to the first heat exchange section and the second heat exchange section and is disposed close to or corresponding to bent portions of the first heat exchange section and the second heat exchange section.

3. The battery according to claim 2, wherein the first heat exchange section comprises a first heat exchange portion and a first bent portion , a plurality of first heat exchange portions are provided, the plurality of first heat exchange portions are disposed at intervals in a first direction and are successively connected by the first bent portion , each first heat exchange portion extends along a second direction, the second direction is disposed at an angle with respect to the first direction, and the first bent portion is arc-shaped; and
the fixing member is connected to the first bent portion or a portion of the first heat exchange portion close to the first bent portion .

4. The battery according to claim 3, wherein a plurality of fixing members are provided and are disposed at least on two sides of the first heat exchange section in the second direction, and each fixing member extends along the first direction and is connected to at least one adjacent first bent portion and/or the portion of the first heat exchange portion close to the first bent portion .

5. The battery according to claim 3 or 4, wherein the second heat exchange section comprises a second heat exchange portion, a third heat exchange portion, a fourth heat exchange portion, a second bent portion, and a third bent portion, the second heat exchange portion extends along a first lateral peripheral edge of the first heat exchange section, the third heat exchange portion is connected between the second heat exchange portion and the first heat exchange section and extends along a second lateral peripheral edge of the first heat exchange section, a first end of the third heat exchange portion is connected to the second heat exchange portion at an angle, a second end of the third heat exchange portion is connected to the first heat exchange section at an angle, and the fourth heat exchange portion is in communication with the second heat exchange portion, is connected to the second heat exchange portion at an angle, and extends along a third lateral peripheral edge of the first heat exchange section;
the second bent portion and the third bent portion are both arc-shaped, the second bent portion is connected between the first end of the third heat exchange portion and the second heat exchange portion, and the third bent portion is connected between the second end of the third heat exchange portion and the first heat exchange section;
the fixing member is connected to the second bent portion or a portion of the second heat exchange portion close to the second bent portion; and
the fixing member is connected to the third bent portion or a portion of the first heat exchange section close to the third bent portion.

6. The battery according to claim 5, wherein the first heat exchange section comprises a plurality of first heat exchange portions, and the plurality of first heat exchange portions are successively connected in the first direction in a bent configuration, each first heat exchange portion extends along the second direction, and the second direction is disposed at an angle with respect to the first direction;
the first heat exchange flow channel further comprises a third heat exchange section and a fourth bent portion, the third heat exchange section is arranged on a side of the first heat exchange section facing away from the third heat exchange portion, the third heat exchange section is connected to one of the plurality of first heat exchange portions that is closest to the second heat exchange portion in the first direction, and the fourth bent portion is arc-shaped and is connected between the third heat exchange section and the first heat exchange portion; and
the fixing member is connected to the fourth bent portion or a portion of the first heat exchange portion close to the fourth bent portion.

7. The battery according to claim 6, wherein a plurality of fixing members are provided and are disposed at least on two sides of the first heat exchange section in the second direction, and each fixing member extends along the first direction; and
one of the plurality of fixing members that is close to the third heat exchange portion is a first fixing member, another one of the plurality of fixing members that is close to the third heat exchange section is a second fixing member, the first fixing member is connected to or disposed close to the second bent portion and is connected to or disposed close to the third bent portion, and the second fixing member is connected to or disposed close to the fourth bent portion.

8. The battery according to claim 6 or 7, wherein the first heat exchange flow channel further comprises a first access section, one end of the first access section is connected to the third heat exchange section at an angle, and the other end of the first access section is formed as a first access port of the heat exchange flow channel ; and the first access section extends along the second direction away from the first heat exchange section, and the third heat exchange section is disposed extending along the first direction.

9. The battery according to any one of claims 5 to 8, wherein the second heat exchange portion extends along the second direction, the second heat exchange section further comprises a sixth bent portion, the sixth bent portion is arc-shaped and is connected between one end of the fourth heat exchange portion and an end of the second heat exchange portion away from the third heat exchange portion, the other end of the fourth heat exchange portion extends along the first direction away from the second heat exchange portion, and the first direction and the second direction are disposed at an angle; and
the fixing member is connected to the sixth bent portion or a portion of the second heat exchange portion close to the sixth bent portion.

10. The battery according to any one of claims 5 to 9, wherein the first heat exchange flow channel further comprises a second access section, one end of the second access section is connected to the fourth heat exchange portion at an angle, and the other end of the second access section is formed as a second access port of the heat exchange flow channel; and the second access section extends along the second direction away from the first heat exchange section, and the fourth heat exchange portion is disposed extending along the first direction.

11. The battery according to any one of claims 3 to 10, wherein a plurality of first heat exchange members are provided and are disposed at intervals in the first direction, and the first direction and the second direction are disposed at an angle; and
the fixing member is connected to the at least one adjacent first bent portion or the portion of the first heat exchange portion close to the first bent portion in the plurality of first heat exchange members .

12. The battery according to any one of claims 2 to 11, wherein the first heat exchange member comprises at least one heat exchange tube, when a plurality of heat exchange tubes are provided, the plurality of heat exchange tubes are disposed at intervals and are in successive communication, and an inner wall of each heat exchange tube defines the first heat exchange flow channel .

13. The battery according to any one of claims 1 to 12, wherein the case body is provided with a plurality of case walls, at least one of the plurality of case walls is a first case wall, the first case wall is provided with a first groove, and the fixing member is at least partially located in the first groove.

14. The battery according to claim 13, wherein a portion of the first case wall protrudes toward a side away from the first heat exchange member to form a convex portion, and the first groove is formed by a peripheral wall at a protrusion position of the convex portion.

15. The battery according to claim 14, wherein the convex portion protrudes toward an inner side of the case body, the battery further comprises a beam structure, the beam structure is disposed in the case body, the beam structure is provided with a second groove, and the convex portion is at least partially located in the second groove.

16. The battery according to claim 15, wherein the beam structure and the fixing member extend along the first direction, and the second groove and the convex portion extend along the first direction.

17. The battery according to claim 16, wherein the beam structure is an expansion beam, the expansion beam is expandable and retractable in the second direction, and the second direction is parallel to the first case wall and is perpendicular to the first direction.

18. The battery according to any one of claims 15 to 17, wherein the beam structure is a hollow beam, and a portion of the beam structure protrudes toward an inner side of the hollow beam to form the second groove.

19. The battery according to any one of claims 15 to 18, wherein the convex portion and the second groove are bonded.

20. The battery according to any one of claims 15 to 19, wherein the beam structure is a non-metal beam structure.

21. The battery according to any one of claims 13 to 20, wherein the first case wall
is a bottom wall of the case body, and the first heat exchange member is located on an outer side of the case body.

22. The battery according to any one of claims 1 to 21, wherein the case body comprises a case shell and a bottom panel, a bottom of the case shell is provided with a first opening, the bottom panel is connected to the bottom of the case shell to close the first opening, the first heat exchange member is fitted on a side of the bottom panel away from the case shell , and the fixing member is disposed on the bottom panel.

23. The battery according to any one of claims 1 to 22, wherein the battery further comprises a protective plate, the protective plate is disposed on a side of the first heat exchange member away from the case body, the protective plate is connected to the case body and forms a protective space with the case body, and the first heat exchange member is located in the protective space.

24. The battery according to any one of claims 1 to 23, wherein the case body is an integrally stamped member and comprises a bottom wall and a surrounding wall.

25. The battery according to claim 24, wherein the first heat exchange member comprises a plurality of flat tubes in successive communication, and an inner wall of each flat tube defines the first heat exchange flow channel .

26. The battery according to any one of claims 1 to 25, wherein the battery further comprises a second heat exchange member, the second heat exchange member is located in the case body and is fitted on at least one inner wall surface of the case body, and a structure of the second heat exchange member is the same as or different from that of the first heat exchange member.

27. The battery according to any one of claims 1 to 26, wherein the battery further comprises a third heat exchange member, the third heat exchange member is located in the case body and is disposed between any two adjacent battery cells battery cell, and a structure of the third heat exchange member is the same as or different from that of the first heat exchange member.

28. A power consuming apparatus, comprising the battery according to any one of claims 1 to 27.
